Europäisches Patentamt

European Patent Office

Office européen des brevets

(19)

(11) **EP 1 313 047 A1**

(12) **EUROPEAN PATENT APPLICATION**
published in accordance with Art. 158(3) EPC

(43) Date of publication:
**21.05.2003 Bulletin 2003/21**

(51) Int Cl.⁷: **G06F 17/60**

(21) Application number: **01948034.2**

(22) Date of filing: **17.07.2001**

(86) International application number:
**PCT/JP01/06151**

(87) International publication number:
**WO 02/007028 (24.01.2002 Gazette 2002/04)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **19.07.2000 JP 2000219570
31.05.2001 JP 2001165316**

(71) Applicant: **Oak, Inc.
Kyoto-shi, Kyoto 615-8191 (JP)**

(72) Inventors:
• **OKUBO, Noboru, c/o OAK, INC.
Kyoto-shi, Kyoto 615-8191 (JP)**
• **OKUBO, Hiroshi, c/o OAK, INC.
Kyoto-shi, Kyoto 615-8191; (JP)**

(74) Representative: **Schoppe, Fritz, Dipl.-Ing.
Schoppe, Zimmermann, Stöckeler & Zinkler
Patentanwälte
Postfach 71 08 67
81458 München (DE)**

(54) **COMMODITY SELLING OR BUYING METHOD USING NETWORK**

(57) A method of selling or purchasing merchandise over a network for allowing an individual to purchase particular merchandise promptly, and to make a donation to an arbitrary organization by purchasing particular merchandise is provided.

This method of selling merchandise over a network is a method of selling merchandise over a network including the Internet, comprising: a step of registering information of merchandise for sale to allow a buyer to browse merchandise information including a description and/or a sale price of the merchandise for sale by a WWW browser; a step of presenting the sale price, and an amount of a donation and/or a percentage of a donation to be given to a donation recipient organization corresponding to the sale price, all being included in the merchandises information; a step of accepting purchase offer information of the merchandise including information identifying the buyer; a step of confirming whether a payment is completed by the buyer; and a step of recording donation information corresponding to a content of the purchase offer information of the buyer.

Fig.1

10

**Description**

**TECHNICAL FIELD**

The present invention relates to a method of selling or purchasing merchandise over a network, and more particularly, to a method of selling or purchasing merchandise over a network for allowing an individual to make a donation to a particular organization by purchasing merchandise.

**BACKGROUND ART**

Conventionally, there has been known a merchandise selling method by which a merchandise seller posts the merchandise being sold on an Internet web page for sale at auction or at an asking price. In the case of a conventional Internet auction, a person who wishes to purchase the merchandise on exhibition inputs bid information indicating a bid price or the like on an input screen displayed on a WWW browser, and successful bid information for the merchandise is notified to a bidder who offered the highest bid amount via e-mail or the web page. Then, the buyer notifies the merchandise seller of his or her name and address, payment method, etc. via e-mail or the web page, and makes a payment. After confirming the completion of the payment, the merchandise seller delivers the merchandise to the winning bidder, whereby the sale of the merchandise is completed.

In the case of a sale at an asking price, a buyer confirms the price specified by the merchandise seller via the WWW browser, and submits a purchase offer by inputting his or her name and address, the payment method, etc. on a purchase offer screen. Thereafter, in the same manner as at an actual auction, the buyer notifies the merchandise seller of his or her name and address, the payment method, etc. via e-mail or the web page, and makes a payment. After confirming the completion of the payment, the merchandise seller delivers the merchandise to the winning bidder, whereby the sale of the merchandise is completed.

According to the conventional method, however, only those who are interested in to obtaining particular merchandise posted on the web page (individuals exhibiting an appetite for buying) purchase the merchandise merely to fulfill their needs. On the other hand, there are buyers who have wished to make donations to arbitrary charity organizations and the like in terms of philanthropy or the like (individuals wishing to participate in philanthropic activities), but because neither opportunities nor sites have been offered, they are not able to make donations and complain that their needs are not satisfied.

It is therefore a chief object of the present invention to provide a method of selling or purchasing merchandise over a network for allowing an individual to purchase particular merchandise promptly and to make a donation to an arbitrary organization by purchasing particular merchandise.

**SUMMARY OF THE INVENTION**

A method of selling merchandise over a network according to Claim 1 of the present invention is a method of selling merchandise over a network including the Internet, comprising: a step of registering information of merchandise for sale so that a buyer can browse merchandise information including a description and/or a sale price of the merchandise for sale by a WWW browser; a step of presenting the sale price, and an amount of a donation and/or a percentage of a donation to be given to a donation recipient organization corresponding to the sale price, all being included in the merchandise information; a step of accepting purchase offer information of the merchandise containing information identifying the buyer; a step of confirming whether a payment is completed by the buyer; and a step of recording donation information corresponding to a content of the purchase offer information of the buyer.

A method of selling merchandise over a network according to Claim 2 of the present invention is the method of selling merchandise over a network set forth in Claim 1, wherein the step of registering information of merchandise for sale includes a step of deciding, at a seller's end, the amount of a donation and/or the percentage of a donation to be given to an arbitrary organization.

A method of selling merchandise over a network according to Claim 3 of the present invention is the method of selling merchandise over a network set forth in Claim 1 or 2, further comprising a step of delivering the merchandise for sale to the buyer.

A method of selling merchandise over a network according to Claim 4 of the present invention is a method of selling merchandise over a network including the Internet, comprising: a step of registering auctioned merchandise information so that a person who wishes to make a purchase can browse merchandise information including a description of auctioned merchandise by a WWW browser; a step of presenting at least a description of merchandise and an amount of a donation and/or a percentage of a donation to be given to a donation recipient organization with respect to a contract price, all being included in said auctioned merchandise information; a step of accepting bid information for the auctioned merchandise including information identifying the person who wishes to make a purchase; a step of determining a winning bidder of the auctioned merchandise; a step of confirming whether a payment corresponding to successful bid information is completed by the winning bidder; and a step of recording donation information corresponding to a content of the bid information of the winning bidder.

A method of selling merchandise over a network according to Claim 5 of the present invention is the method of selling merchandise over a network set forth in Claim 4, wherein the step of registering auctioned merchandise information preferably includes a step of deciding, at a seller's end, a ratio and/or the amount of a donation to be given to an arbitrary organization with respect to the contract price.

A method of selling merchandise over a network according to Claim 6 of the present invention is the method of selling merchandise over a network set forth in Claim 4 or 5, further comprising a step of delivering said auctioned merchandise to a winning bidder.

A method of selling merchandise over a network according to Claim 7 of the present invention is the method of selling merchandise over a network set forth in any of Claims 1 through 6, wherein the step of recording donation information preferably includes a step of creating or updating a donation information database corresponding to the content of the purchase offer information of the buyer.

A method of selling merchandise over a network according to Claim 8 of the present invention is the method of selling merchandise over a network set forth in any of Claims 1 through 7, wherein the step of recording donation information preferably includes a step of recording the donation information as a deposit.

A method of selling merchandise over a network according to Claim 9 of the present invention is the method of selling merchandise over a network set forth in any of Claims 1 through 8, further comprising a step of allowing the buyer to browse information related to the donation recipient organization.

A method of selling merchandise over a network according to Claim 10 of the present invention is the method of selling merchandise over a network set forth in any of Claims 1 through 9, further comprising a step of allowing the buyer to decide the donation recipient organization.

A method of purchasing merchandise over a network according to Claim 11 of the present invention is a method of purchasing merchandise over a network including the Internet, comprising: a step of registering information of merchandise for sale so that a buyer can browse merchandise information including a description and a sale price of the merchandise for sale by a WWW browser; a step of presenting at least a description of the merchandise, the sale price, and an amount of a donation to be given to a donation recipient organization included in the sale price, all being included in the merchandises information; a step of inputting purchase offer information of the merchandise including information identifying the buyer; a step of making a payment corresponding to a purchase offer at the buyer's end; a step of confirming whether the payment is completed; a step of creating or updating a donation information database corresponding to a content of the purchase offer information of the buyer; and a step of delivering the merchandise for sale to the buyer.

A method of purchasing merchandise over a network according to Claim 12 of the present invention is the method of purchasing merchandise over a network set forth in Claim 11, wherein the step of registering information of merchandise for sale includes a step of deciding, at a seller's end, the amount of a donation to be given to an arbitrary organization.

A method of purchasing merchandise over a network according to Claim 13 of the present invention is the method of purchasing merchandise over a network set forth in Claim 1 or 12, wherein the step of deciding, at a seller's end, the amount of a donation to be given to an arbitrary organization is conducted more than once by the seller with an arbitrary amount of a donation.

A method of purchasing merchandise over a network according to Claim 14 of the present invention is a method of purchasing merchandise over a network including the Internet, comprising: a step of registering auctioned merchandise information so that a person who wishes to make a purchase can browse merchandise information including a description of auctioned merchandise by a WWW browser; a step of presenting at least a description of merchandise and a ratio of an amount of a donation to be given to a donation recipient organization with respect to a contract price, all being included in the auctioned merchandise information; a step of inputting bid information for the auctioned merchandise including information identifying the person who wishes to make a purchase; a step of determining a winning bidder of the auctioned merchandise; a step of notifying successful bid information to the winning bidder through the network; a step of making a payment corresponding to the successful bid information at the winning bidder's end; a step of confirming whether the payment is completed; a step of creating or updating a donation information database corresponding to a content of the bid information of the winning bidder; and a step of delivering the auctioned merchandise to the winning bidder.

A method of purchasing merchandise over a network according to Claim 15 of the present invention is the method of purchasing merchandise over a network set forth in Claim 14, wherein the step of registering auctioned merchandise information includes a step of deciding, at a seller's end, a ratio to be donated to an arbitrary organization with respect to the contract price.

A method of purchasing merchandise over a network according to Claim 16 of the present invention is the method of purchasing merchandise over a network set forth in Claim 14 or 15, wherein the step of deciding, at a seller's end, a ratio to be donated to an arbitrary organization with respect to the contract price is conducted more than once by the seller with an arbitrary donation ratio.

A method of purchasing merchandise over a network according to Claim 17 of the present invention is the method of purchasing merchandise over a network set forth in any of Claims 11 through 16, further comprising a step of allowing the buyer to browse information related to the donation recipient organization.

A method of purchasing merchandise over a network according to Claim 18 of the present invention is the method of purchasing merchandise over a network set forth in Claim 17, wherein a ranking based on a size of actual taking of donations is displayed in the step of allowing the buyer to browse information related to the donation recipient organization.

A method of purchasing merchandise over a network according to Claim 19 of the present invention is the method of purchasing merchandise over a network set forth in any of Claims 11 through 18, further comprising a step of allowing said buyer to decide the donation recipient organization.

A method of purchasing merchandise over a network according to Claim 20 of the present invention is the method of purchasing merchandise over a network set forth in any of Claims 11 through 18, further comprising a step of allowing the buyer to select the donation recipient organization and to decide the amount of a donation.

A method of purchasing merchandise over a network according to Claim 21 of the present invention is the method of purchasing merchandise over a network set forth in Claim 20, wherein the step of allowing the buyer to select the donation recipient organization and to decide the amount of a donation is preferably conducted at an arbitrary time by the buyer or the winning bidder.

The above and other steps, elements, characteristics, features, and advantages of the present invention will become more apparent in the following detailed description of preferred embodiments of the invention with reference to the drawings.

## BRIEF DESCRIPTION OF THE DRAWINGS

Fig. 1 is an illustration view showing a shopping system to which a method of purchasing merchandise over a network of preferred embodiments of the present invention is applied;

Fig. 2 is a functional block diagram showing a shopping mall server;

Fig. 3 is a flowchart detailing an operation when an auction sale is conducted by a shopping system 10 to which the method of purchasing merchandise over a network of preferred embodiments of the present invention is applied;

Fig. 4 is a flowchart detailing an operation when merchandise is on sale at an asking price in the shopping system 10 to which the method of purchasing merchandise over a network of preferred embodiments of the present invention is applied;

Fig. 5 is an illustration view showing a shopping system to which the method of purchasing merchandise over a network of preferred embodiments of the present invention is applied;

Fig. 6 is a schematic view showing a flow from merchandise registration to settlement in a case where the method of purchasing merchandise over a network of preferred embodiments of the present invention is applied;

Fig. 7 is a functional block diagram of a shopping mall sever;

Fig. 8 is a functional block diagram of a database server in the shopping mall server;

Fig. 9 is an illustration view of a screen showing a category managing function of a mall management unit;

Fig. 10 is an illustration view of a screen showing category and percentage of a net operating expenses managing functions of the mall management unit;

Fig. 11 is an illustration view of a screen showing shop information managing and searching functions of a shop information management unit;

Fig. 12 is an illustration view of a screen showing a membership information managing function of a membership management unit;

Fig. 13 is an illustration view of a screen showing an NPO information managing function of an NPO management unit;

Fig. 14 is an illustration view of a screen showing an NPO payment managing function of the NPO management unit;

Fig. 15 is an illustration view of a screen showing a shopping order information managing function of an order-by-shopping management unit;

Fig. 16 is an illustration view of a screen showing an auction order information managing function of an order-by-auction management unit;

Fig. 17 is an illustration view of a screen showing member-addressed-mail managing and searching functions of a mail management unit;

Fig. 18 is a flow view showing a flow of a shop registration procedure;

Fig. 19 is an illustration view of a screen showing a shop information managing function;

Fig. 20 is an illustration view of a screen showing a shopping merchandise information managing function;

Fig. 21 is an illustration view of a screen showing registration and categories of merchandise to be registered for shopping;

Fig. 22 is an illustration view of a screen showing a merchandise information managing function for shopping;

Fig. 23 is an illustration view of a screen showing a registering method of new auctioned merchandise;

Fig. 24 is an illustration view of a screen showing a shopping sale merchandise information managing method;

Fig. 25 is an illustration view of a screen showing an auction sale merchandise information managing method;

Fig. 26 is an illustration view of a screen for a search result showing an order managing method;

Fig. 27 is an illustration view of an auction successful bid list screen by a search showing an auction successful bid managing method;

Fig. 28 is a flow view showing a flow of an NPO registration procedure;

Fig. 29 is an illustration view of a screen showing NPO information management;

Fig. 30 is a flow view showing a flow (part 1) of shopping;

Fig. 31 is a flow view showing a flow (part 2) of shopping;

Fig. 32 is a flow view showing a flow of an auction;

Fig. 33 is an illustration view of a screen showing the top page for a buyer;

Fig. 34 is an illustration view of a merchandise information display screen showing merchandise information output information at shopping;

Fig. 35 is an illustration view of a shopping cart content screen showing the content of a shopping cart at shopping;

Fig. 36 is an illustration view of a purchase offer screen showing a purchase offer submitting method at shopping;

Fig. 37 is an illustration view of an NPO selection screen showing an NPO selecting method at shopping;

Fig. 38 is an illustration view of a purchase confirmation screen showing the purchase offer submitting method by shopping;

Fig. 39 is an illustration view of a search entry input screen showing an auctioned merchandise search method;

Fig. 40 is an illustration view of a search result output screen showing the auctioned merchandise search method;

Fig. 41 is an illustration view of a merchandise information display screen showing a merchandise information display method at auction;

Fig. 42 is an illustration view of an auction bid successful/unsuccessful decision screen showing a purchasing method at auction; and

Fig. 43 is an illustration view of a purchase history screen showing member's purchase history management.

## BEST MODE FOR CARRYING OUT THE INVENTION

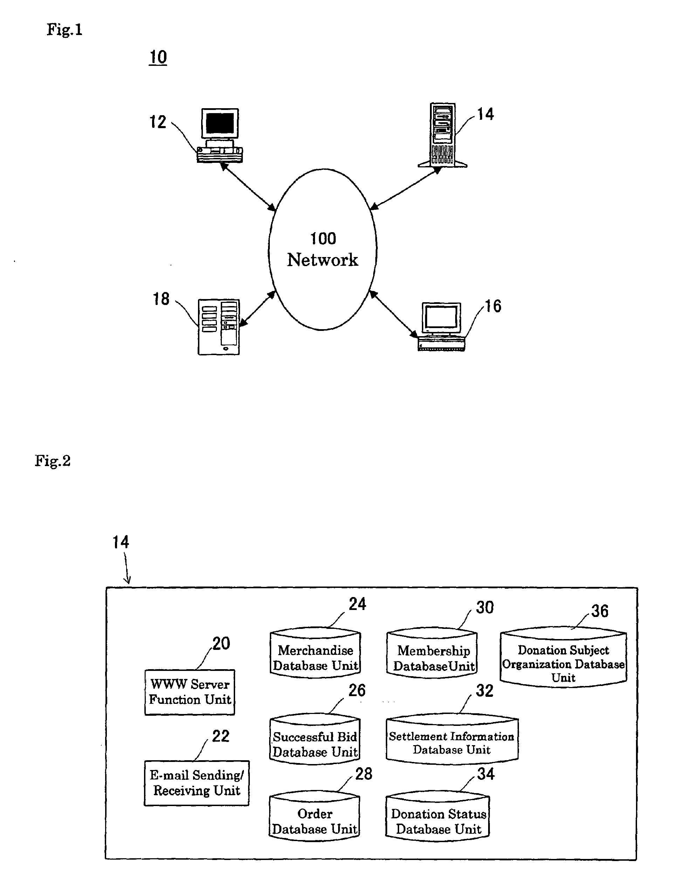

Fig. 1 is an illustration view showing a shopping system to which a method of purchasing merchandise over a network of a preferred embodiment of the present invention is applied. Broadly speaking, a shopping system 10 preferably includes a buyer terminal 12, a shopping mall server 14, a merchandise seller terminal 16, a payment handling agent server 18, and a network 100.

The buyer terminal 12 accesses the shopping mall server 14 via the network 100, such as the Internet, and performs a function of browsing the descriptions of merchandise registered with the shopping mall server 14, and inputting purchase offer data, such as the name and address of a buyer and the payment method, inputted when a purchase offer is submitted, or inputting bid information inputted when a bid is placed at an auction. Also, the buyer terminal 12 performs a function of sending/receiving e-mail to/from an arbitrary e-mail server (not shown) based on the SMTP protocol and the POP3 protocol. Herein, a workstation or a personal computer provided with communication equipment linkable to the network 100, such as the Internet, and pre-installed with the WWW browser application and the e-mail client application, or a cellular phone linkable to the Internet is preferably used as the buyer terminal 12.

The shopping mall server 14 performs a function of managing the sale of merchandise and the donations to be given to arbitrary organizations by sending/receiving various kinds of data to/from the buyer terminal 12, merchandise seller terminal 16, and payment handling agent server 18. Fig. 2 is a functional block diagram showing the shopping mall server 14. The shopping mall server 14 is provided with a WWW server function unit 20, an e-mail sending/receiving unit 22, a merchandise database unit 24, a successful bid database unit 26, an order database unit 28, a membership database unit 30, a settlement information database unit 32, and a donation status database unit 34.

The WWW server function unit 20 performs a function of distributing various kinds of data to the buyer terminal 12 and the merchandise seller terminal 16 based on the HTTP protocol. To be more specific, data of various screens used in browsing and inputting data is sent as distribution data, including: data for displaying descriptions of merchandise for sale recorded in the merchandise database unit 24; data for displaying descriptions of auctioned merchandise; data for displaying an input screen of purchase offer data; data for displaying an input screen of bid data; data for displaying the data inputted from the buyer terminal 12 and the merchandise seller terminal 16 for confirmation, all of which will be described more in detail later.

The e-mail sending/receiving unit 22 performs a function of sending/receiving e-mail based on the SMTP protocol and the POP3 protocol. To be more specific, e-mail to be sent or received includes e-mail notifying the content of the successful bid to the winning bidder at auction and e-mail being sent when a purchase offer is submitted for the merchandise to be purchased.

The merchandise database unit 24 stores data of the merchandise descriptions of the merchandise being sold or auctioned in the shopping mall server 14, in addition to data relating to an amount of a donation to be given to a donation recipient organization included in the sale price when the merchandise is sold at an asking price, and data indicating a ratio of an amount of a donation to be given to a donation recipient organization with respect to a contract price when the merchandise is sold at auction. Herein, data is registered with the merchandise database unit 24 as needed by the merchandise seller from the merchandise seller terminal 16 via a merchandise data registration interface provided by the WWW server function unit 20.

To be more specific, with regard to the shopping merchandise, data including the merchandise code, merchandise name, sound representation, search keyword, explanation of merchandise, specification/explanatory description, price, postage, a percentage of a donation, etc. is recorded and managed, and with regard to the auctioned merchandise, data including the merchandise code, merchandise name, merchandise category, search keyword, explanation of merchandise, specification/explanatory description, opening bid, bid rate, postage, auction period (open date and close date), a percentage of a donation, etc. is recorded and managed.

The successful bid database unit 26 stores data related to the contract price of the merchandise sold at auction, personal information of the winning bidder, such as his or her name and address, the payment method, etc. Also, the successful bid database unit 26 performs a function of recording and managing bid data placed by the bidders and determining the winning bidder based on the bid period and the bid data.

To be more specific, data including the shop name, close date, merchandise ID, merchandise name, bid count, bid rate, opening bid, winning bidder ID, contract price, etc. is recorded and managed.

The order database unit 28 stores purchase offer data inputted from a screen (interface) provided by the WWW server function unit 20 to input purchase offer data. The purchase offer data stored in the order database unit 28 is used when the merchandise seller confirms the content of an order by browsing the content with the merchandise seller terminal 16 he or she uses.

To be more specific, data including the order information (order number, date of the order, shop ID, shop name, exhibition group, and recipient NPO), orderer(member ID, name of the orderer, sound representation of the name, postal code, address, e-mail address, telephone number, and facsimile number), delivery destination (name, sound representation, address, telephone number, and e-mail address), order status (acceptance), ordered merchandise information (merchandise ID, merchandise name, quantity of items, unit price, an amount of a donation, postage, an amount, and total donations), etc. is recorded and managed.

The membership database unit 30 stores information specific to each member as data, including the name or corporation name, address, URL of the web page, contact e-mail address, etc. of the buyer or merchandise seller registered with the shopping mall server 14 as a member. The data stored in the membership database unit 30 is the data inputted by the buyer or the merchandise seller from the screen provided by the WWW server function unit 20 for the membership registration information, or the data inputted by the manager of the shopping mall server 14.

To be more specific, data including the name, sound representation, nickname, member ID, password, gender, birth date, telephone number, facsimile number, address, member's e-mail address, URL of the member's own web page, occupation, married/single, the number of children, annual income, categories of interest, approval/disapproval of DM delivery, etc. is recorded and managed.

The settlement information database unit 32 stores data related to a payment by the buyer in association with the merchandise sold at an asking price and at auction. To be more specific, data indicating the payment status of the buyer is stored, and the merchandise seller can browse the content with the merchandise seller terminal 16 he or she uses, and the data is used when the merchandise seller confirms the payment status. When the merchandise seller confirms the payment status, it is arranged in such a manner that the identity of the merchandise seller is authenticated with the ID and password assigned to the merchandise seller in advance, so that data irrelevant to the identified merchandise seller will not be browsed.

The donation status database unit 34 stores an amount of donations accrued when the buyer purchases the merchandise or the merchandise seller sells the merchandise, the actual giving condition of the donations, etc. The data stored in the donation status database unit 34 is provided to the buyer and the merchandise seller by being displayed on the screen of the buyer terminal 12 while the buyer accesses the shopping mall server 14, or by being displayed on an arbitrary confirmation screen.

A donation subject organization database unit 36 stores various kinds of data related to donation recipient organizations. The storage data includes text data and picture data explaining the content of activities of the organizations, URLs when the organizations have their Internet web pages, etc.

To be more specific, data including the name of the organization, sound representation, NPO ID, password, NPO category, telephone number, facsimile number, address, name of the representative, name of the department in charge, name of a person in charge, e-mail address of the person in charge, URL, profile of the NPO, thanks message, contact e-mail address, acceptance/non-acceptance of donations, etc. is recorded and managed.

The merchandise seller terminal 16 accesses the shopping mall server 14 via the network 100, such as the Internet, in the same manner as the buyer terminal 12, and performs a function of registering data of the merchandise descriptions of the merchandise for sale or for auction with the shopping mall server 14, confirming the content of an order, confirming the payment status, and inputting the delivery status of the merchandise. Also, the merchandise seller terminal 16 performs a function of sending/receiving e-mail to/from an arbitrary e-mail server (not shown) based on the SMTP protocol and the POP3 protocol. Herein, a workstation or a personal computer provided with communication equipment linkable to the network 100, such as the Internet, and pre-installed with the WWW browser application and the e-mail client application is preferably used as the merchandise seller terminal 16.

The payment handling agent server 18 performs a function of confirming the payment made for the liabilities incurred for the merchandise purchased in the shopping mall server 14, inputting data indicating the buyer's payment status into the shopping mall server 14, and updating the content of the settlement information database unit 32. Herein, an ATM terminal installed at the bank or a convenience store or a host computer managing the register is preferably used as the payment handling agent server 18.

Besides the above-described Internet line, a LAN network, a public switched phone network, an ISDN network, a wireless packet communication network or other suitable network may be preferably used as the network 100.

Next, the following description will describe an operation of the shopping system 10 to which the method of purchasing merchandise over a network of preferred embodiments of the present invention is applied.

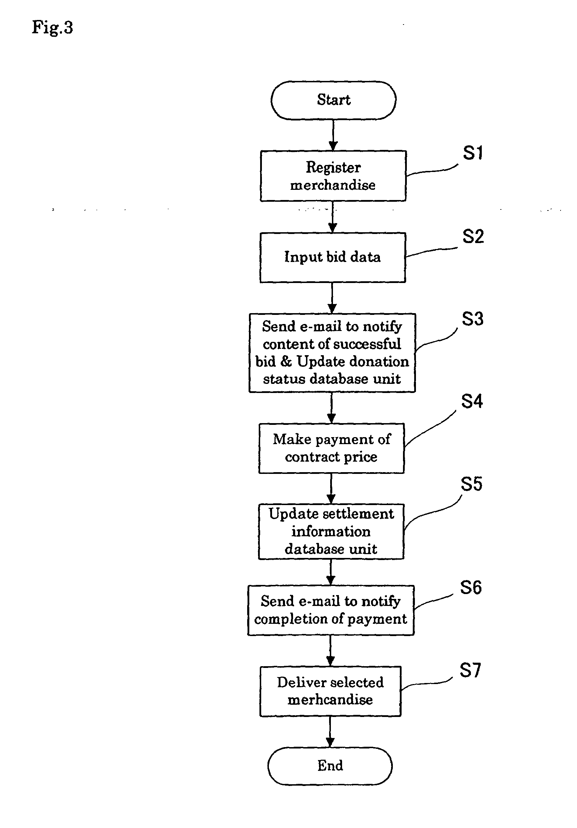

Fig. 3 is a flowchart detailing an operation when the sale at auction is conducted by the shopping system 10 to which the method of purchasing merchandise over a network of a preferred embodiment of the present invention is applied. In the following, an explanation of an operation when the sale at auction is conducted will be given with reference to Fig. 3.

Initially, the auctioned merchandise is registered with the shopping mall server 14 by the merchandise seller terminal 16 (Step S1). As the content to be registered, data indicating the merchandise description and data of the opening bid at auction, plus data indicating a ratio of an amount of a donation with respect to the contract price are inputted.

Then, a page related to the auctioned merchandise is displayed on the web page by the WWW server function unit 20, and a buyer who wishes to purchase the merchandise inputs bid data by using a purchase terminal (Step S2).

Then, for the merchandise for which a bid period has passed, the successful bid database unit 26 determines the winning bidder, and the e-mail sending/receiving unit 22 sends e-mail notifying the content of the successful bid to the winning bidder and the merchandise seller. Also, in conjunction with the determination of the winning bidder, the data related to the donation status of the winning bidder in the donation status database unit 34 is updated (Step S3). Herein, e-mail to the winning bidder and the merchandise seller is searched through and extracted from the membership database unit 30 as needed.

The winning bidder makes a payment of the contract price at an arbitrary payment agent based on the content of the e-mail notifying the content of the successful bid (Step S4).

The payment handling agent server 18 in the payment agent where the winning bidder made the payment inputs data indicating the completion of the payment by the wining bidder into the shopping mall server 14, and updates the content of the settlement information database unit 32 (Step S5).

After the data indicating the completion of the payment by the winning bidder is inputted by the payment handling agent server 18, the e-mail sending/receiving unit 22 sends e-mail notifying the confirmation of the completion of the payment to the merchandise seller terminal 16 (Step S6).

Upon receipt of the e-mail notifying the confirmation of the completion of the payment, the merchandise seller delivers the selected merchandise to the winning bidder based on the content of the e-mail notifying the content of the successful bid regarding the selected merchandise (Step S7).

In this manner, in the shopping system 10 to which the method of purchasing merchandise over a network of a preferred embodiment of the present invention is applied, it is possible to promptly handle various kinds of processing involved with the sale at auction, and to promptly hold and process the information related to a donation accrued when the buyer purchased the merchandise. Also, the buyer is able to select a donation recipient organization and give a partial or full amount of the donation immediately after he or she purchased the merchandise or at an appropriate time.

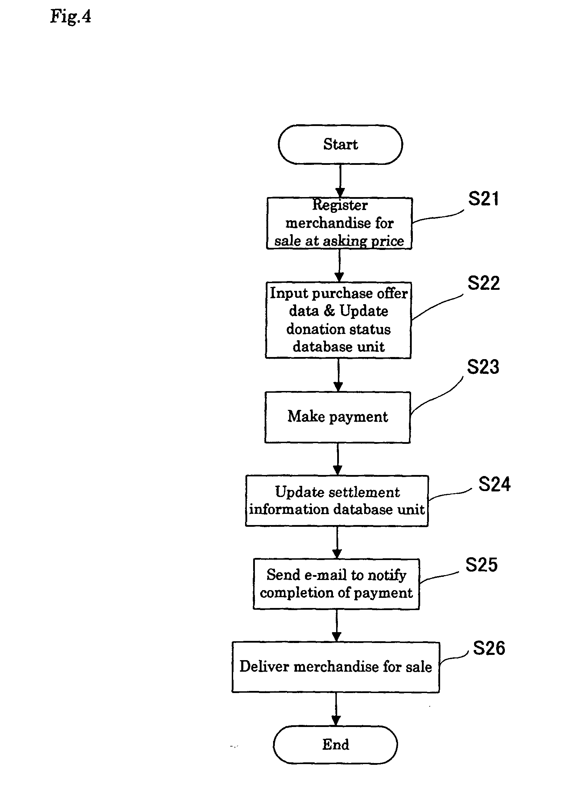

Fig. 4 is a flowchart detailing an operation when the merchandise is on sale at an asking price in the shopping system 10 to which the method of purchasing merchandise over a network of a preferred embodiment of the present invention is applied. In the following, an explanation of an operation when the merchandise is on sale at an asking price will be given with reference to Fig. 4.

Initially, the merchandise for sale at an asking price is registered with the shopping mall server 14 by the merchandise seller terminal 16 (Step S21). As the content to be registered, data indicating the merchandise description and data of a sale price, plus data indicating an amount of donation included in the sale price are inputted.

Then, a page related to the merchandise for sale is displayed in the web page by the WWW server function unit 20, and a person who wishes to purchase the merchandise inputs purchase offer data by using a purchase terminal. In association with the input of the purchase offer data, the data related to the donation status of the buyer in the donation status database unit 34 is updated (Step S22).

Then, the buyer makes a payment at an arbitrary payment agent based on the content of the purchase offer he or she has inputted (Step S23).

The payment handling agent server 18 in the payment agent where the buyer made the payment inputs data indicating the completion of the payment by the buyer into the shopping mall server 14, and updates the content of the settlement information database unit 32 (Step S24).

After the data indicating the completion of the payment by the buyer is inputted by the payment handling agent server 18, the e-mail sending/receiving unit 22 sends e-mail notifying the content of the purchase offer and the confirmation of the completion of the payment to the merchandise seller terminal 16 (Step S25).

Upon receipt of the e-mail notifying the content of the purchase offer and the confirmation of the completion of the payment, the merchandise seller delivers the purchased merchandise to the buyer based on the content of the e-mail (Step S26).

In this manner, in the shopping system 10 to which the method of purchasing merchandise over a network of a preferred embodiment of the present invention is applied, it is possible to promptly handle various kinds of processing involved with the sale at an asking price, and to promptly hold and process the information related to a donation accrued when the buyer purchased the merchandise. As is with the sale at an actual auction, the buyer is able to select a donation recipient organization and give a partial or full amount of the donation immediately after he or she purchased the merchandise or later at an appropriate time.

The above-described preferred embodiment described a case where the step of deciding an amount of a donation to be given to an arbitrary organization is performed once by the merchandise seller. However, the arrangement is not limited to the foregoing, and the merchandise seller may change or decide an amount of a donation more than once.

Also, in the preferred embodiment described above, the method does not include a step of browsing the information related to a donation recipient organization by the buyer. However, it may be arranged in such a manner that the method includes the step of browsing the information related to the donation recipient organization. In this case, the buyer browses the data in the donation subject organization database unit 36, or browses the web pages of the individual organizations from the URLs or the like stored in the donation subject organization database unit 36. Also, in this case, it may be arranged so that the donation recipient organizations are displayed according to the ranking by the size of the actual giving of the donations.

Next, the following description will describe another preferred embodiment, that is, a method of purchasing merchandise over a network by shopping and auction that allows an individual to support an NPO or the like by way of charity.

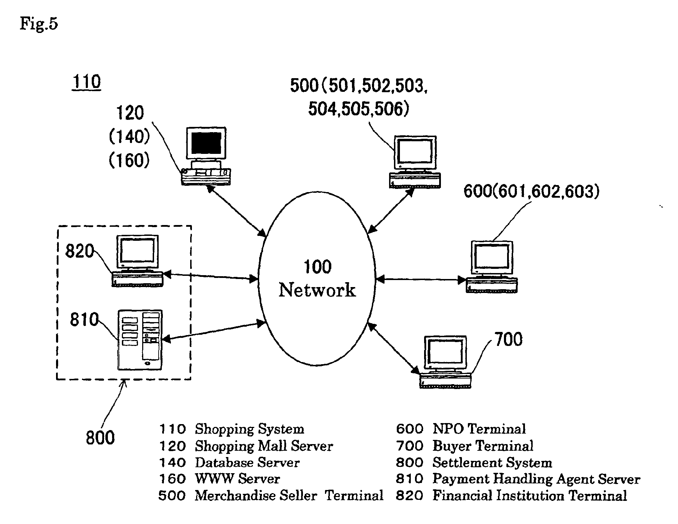

Fig. 5 is an illustration view showing a shopping system to which the method of purchasing merchandise over a network of a preferred embodiment of the present invention is applied.

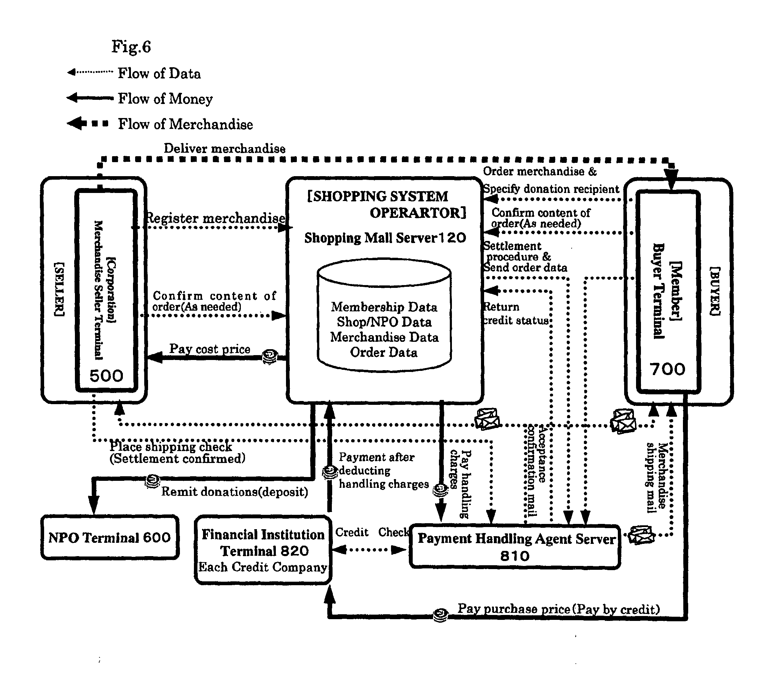

Fig. 6 is a schematic view showing a flow from the registration of the merchandise to the settlement in a case where the method of purchasing merchandise over a network of a preferred embodiment of the present invention is applied.

A shopping system 110 is provided with a shopping mall server 120 installed at a shopping system operator, a merchandise seller terminal 500 installed at the merchandise seller, an NPO terminal 600, a buyer terminal 700 installed at the buyer of the merchandise, a settlement system 800 having a payment handling agent server 810 and a financial institution terminal 820, and a network 100.

The shopping mall server 120 performs a function of managing the sale of the merchandise and the donations to be given to arbitrary organizations by sending/receiving various kinds of data to/from the buyer terminal 700, merchandise seller terminal 500, NPO terminal 600, and settlement system 800.

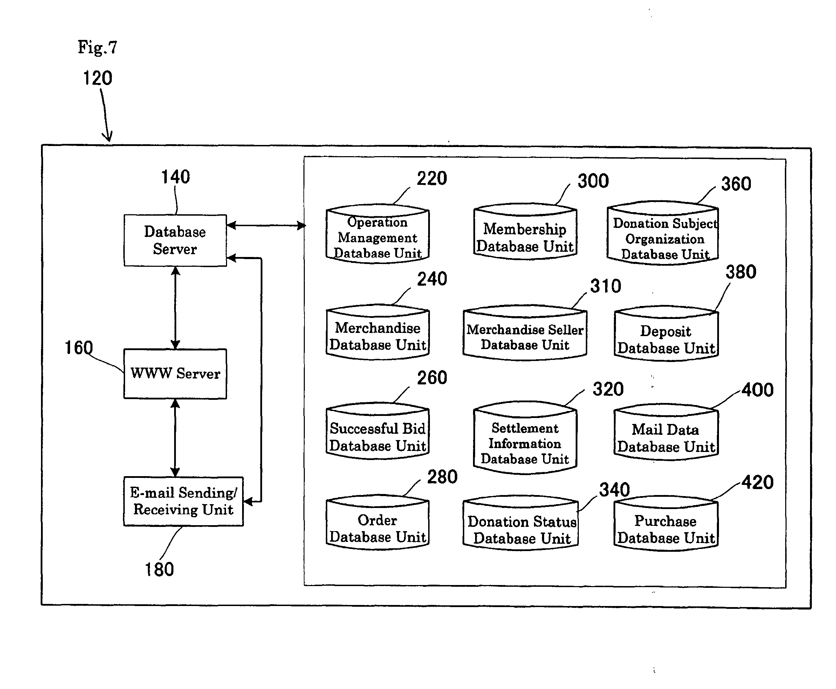

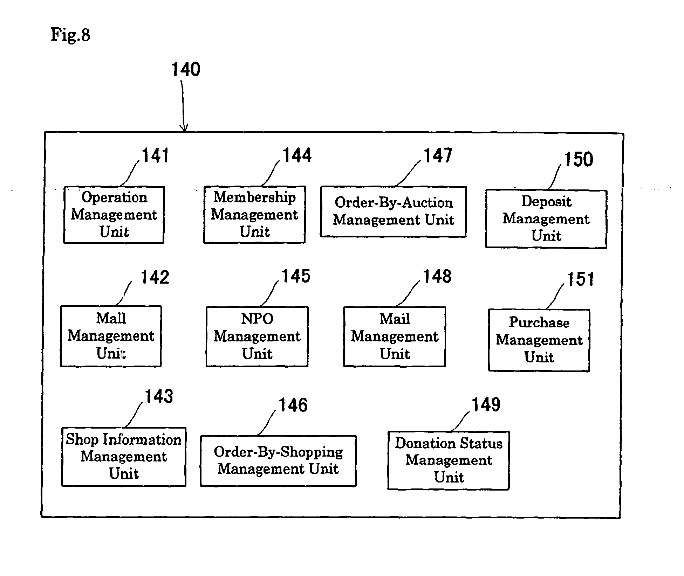

Fig. 7 is a functional block diagram showing the shopping mall server 120, and Fig. 8 is a functional block diagram showing the function of a database server 140.

The shopping mall server 120 is provided with the database server 140, a WWW server 160, and an e-mail sending/receiving unit 180.

The database server 140 is provided with an operation management unit 141 for managing the shopping system 110, a mall management unit 142, a shop information management unit 143, a membership management unit 144, an NPO management unit 145, an order-by-shopping management unit 146, an order-by-auction management unit 147, a mail management unit 148, a donation status management unit 149, a deposit management unit 150, and a purchase management unit 151.

The shopping mall server 120 is provided with databases for managing various kinds of information, such as an operation management database unit 220, a merchandise database unit 240, a successful bid database unit 260, an order database unit 280, a membership database unit 300, a merchandise seller database unit 310, a settlement information database unit 320, a donation status database unit 340, a donation subject organization database unit 360, a deposit database unit 380, a mail data database unit 400, and a purchase database unit 420, and the information is recorded and managed by the database server 140.

As shown in Fig. 6, the operation management unit 141 performs a function of registering, changing, and deleting an ID, an authorization type, and a password assigned to an operation manager of the shopping system in the shopping system operator who provides a service by possessing the shopping mall server 120 or the like, and it records and manages the ID in the operation management database unit 220.

It is arranged in such a manner that when the operation manager inputs the assigned manager ID and password and presses the login button, he or she is allowed to login to the master, shop information management unit 143, and NPO management unit 145 by the manager's authorization according to the authorization type.

The mall management unit 142 performs a function of managing the categories of the merchandise seller (shop), merchandise or the like.

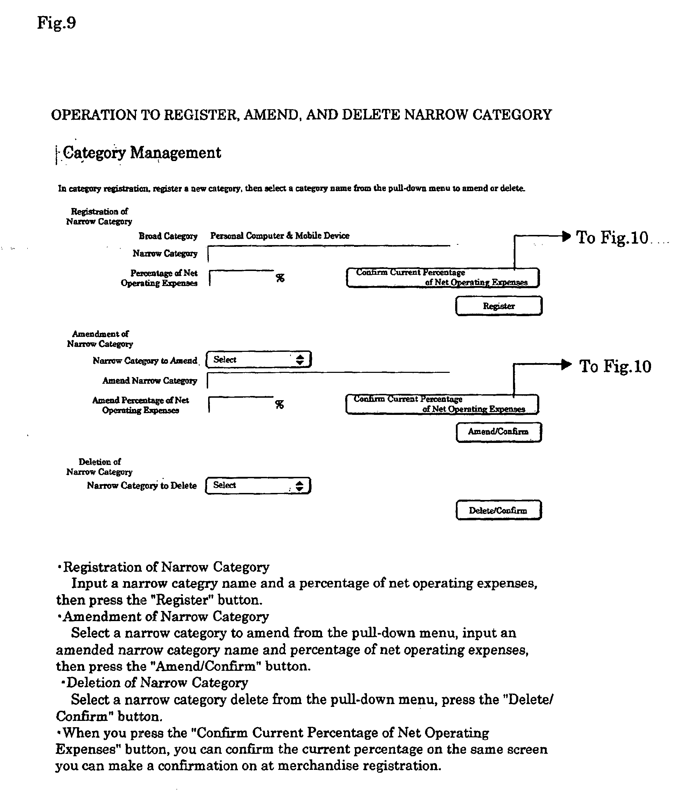

Also, as shown in Fig. 9, the mall management unit 142 performs a function of registering, deleting, and changing the broad categories and narrow categories. For example, the mall management unit 142 classifies the merchandise seller (shop) and merchandise into broad categories, such as "Personal Computer & Mobile Device" and "Games & Software" while classifying each broad category into the narrow categories, and for example, it classifies the broad category of "Personal Computer & Mobile" into the narrow categories of "Personal Computer & Computer", "Peripheral Parts", "Software", "Mobile Device & Cellular Phone", "Communication & Service", and "Office & Supplies", and it records and manages the categories in the merchandise database unit 240 and the merchandise seller database unit 310.

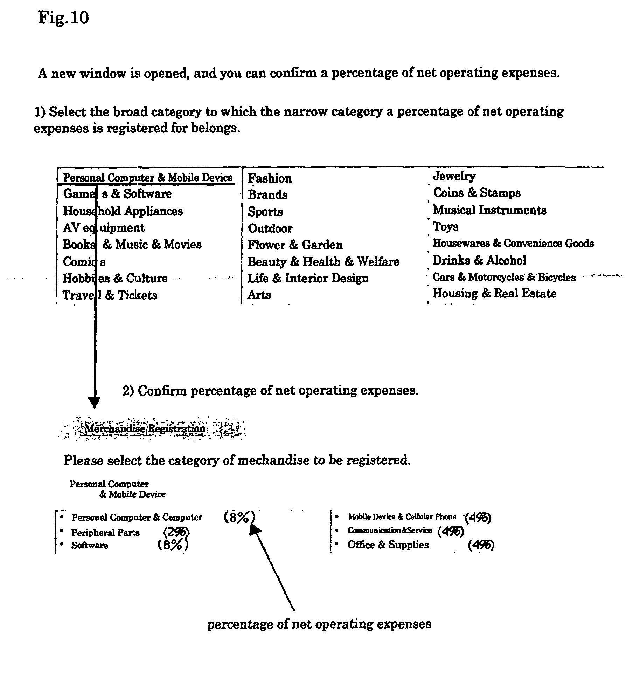

Then, as shown in Fig. 10, in order to allocate the operating expenses of the service provider who provides a service by possessing the shopping mall server 120 or the like to each transaction for the merchandise belonging to each narrow category, the mall management unit 142 functions so that a percentage of net operating expenses, that is, a value of a percentage of the net operating expenses, for example, an amount ranging from 5% to 20% of the price of the registered merchandise, is recorded and managed in the merchandise database unit 240. A percentage of the net operating expenses is determined per 1% for individual merchandise in the narrow categories.

The mall management unit 142 performs a function of searching for the merchandise seller (shop), merchandise, etc.

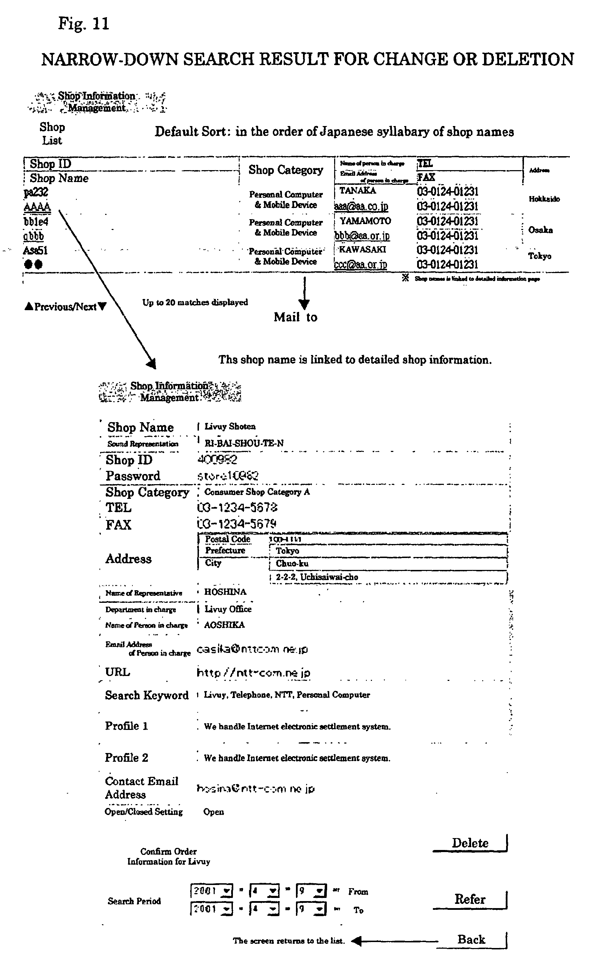

As shown in Fig. 11 and Figs. 20 through 25, the shop information management unit 143 performs a function of managing information related to the shop and managing the information of merchandise being sold.

In regard to the management of the information related to the shop, a function of managing the information by registering, changing, and deleting the data, such as the shop name, shop ID, password, shop category, telephone number, facsimile number, address, name of the representative, name of a department in charge, name of a person in charge, e-mail address of the person in charge, URL, search keyword, profile of each shop, contact e-mail address, open/closed setting, is provided, and the foregoing information is recorded and managed in the merchandise seller database unit 310.

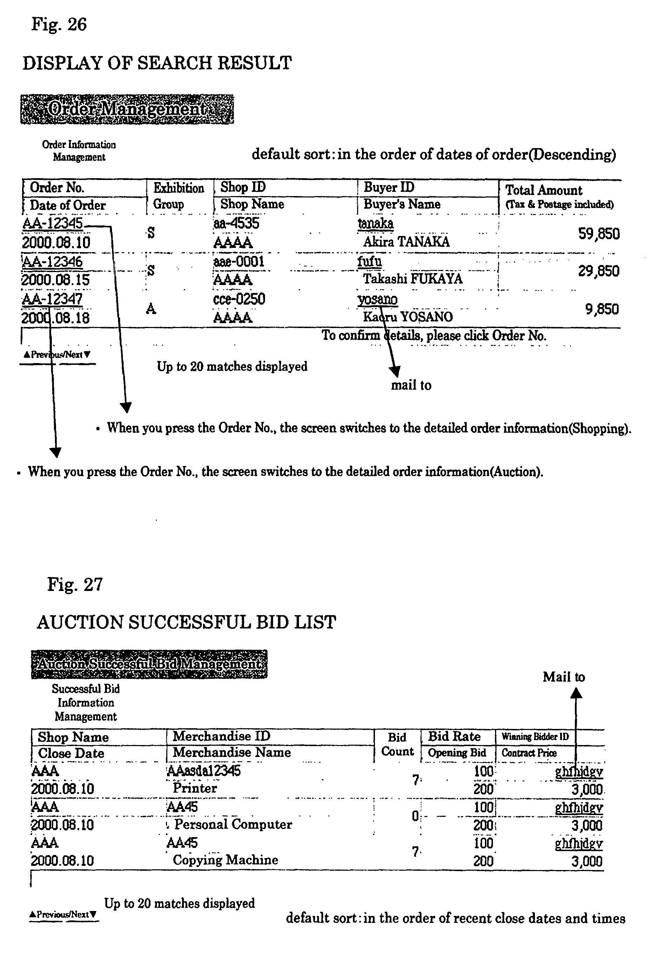

Further, as shown in Fig. 26, the shop information management unit 143 performs a function of managing the information of the shopping merchandise and auctioned merchandise by dividing the merchandise being sold into exhibition groups, that is, "S" for the shopping merchandise and "A" for the auctioned merchandise.

To be more specific, in the case of the shopping merchandise, the exhibition group, merchandise code, merchandise name, sound representation, merchandise category, search keyword, explanation of merchandise, specification/explanatory description, price, postage, and a percentage of a donation, and in the case of the auctioned merchandise, in addition to the exhibition group, merchandise code, merchandise name, sound representation, merchandise category, search keyword, explanation of merchandise, specification/explanatory description, price, postage, and a percentage of a donation, the opening bid, bid rate, and auction period (open date and close date) are managed as the merchandise information.

The shop information management unit 143 performs a function of searching for data related to the shop and merchandise.

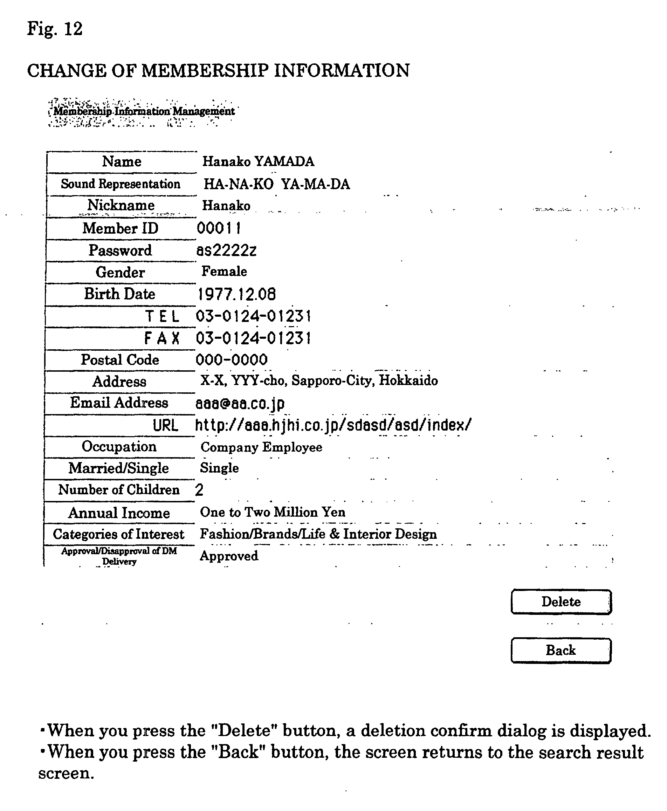

As shown in Fig. 12, the membership management unit 144 performs a function of managing the information of the members as buyers, by registering, changing, and deleting the data, such as the name, sound representation, nickname, member ID, password, gender, birth date, telephone number, facsimile number, postal code, address, e-mail address, URL, occupation, married/single, the number of children, annual income, categories of interest, approval/disapproval of DM delivery, and it records and manages the information in the membership database unit 300. The data recorded in the membership database unit 300 is the data inputted or changed by the buyer from the buyer terminal 700 on a screen (interface) provided by the WWW server 160 for the membership information registration.

The membership management unit 144 performs a function of searching for data related to the members.

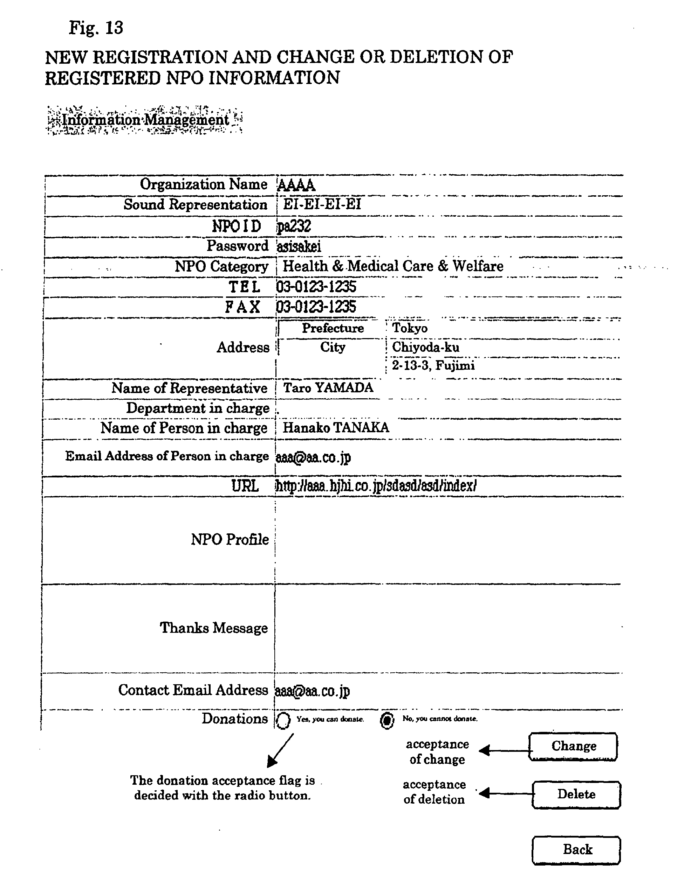

As shown in Fig. 13, the NPO management unit 145 manages NPO (Non-Profit Organization) information by registering a new NPO as a donation recipient organization and by changing and deleting the registered NPO information, and it records and manages the information in the donation subject organization database unit 360.

The NPO information includes the organization name, sound representation, NPO ID, password, NPO category, telephone number, facsimile number, address, name of the representative, name of a department in charge, name of a person in charge, e-mail address of the person in charge, URL, profile of the NPO, contact e-mail address, acceptance/non-acceptance of donations, etc.

The NPO management unit 145 performs a function of searching for data related to the NPOs.

An order management unit is provided with the order-by-shopping management unit 146 and the order-by-auction management unit 147, and performs a function of managing an order for the merchandise placed by a member as a buyer.

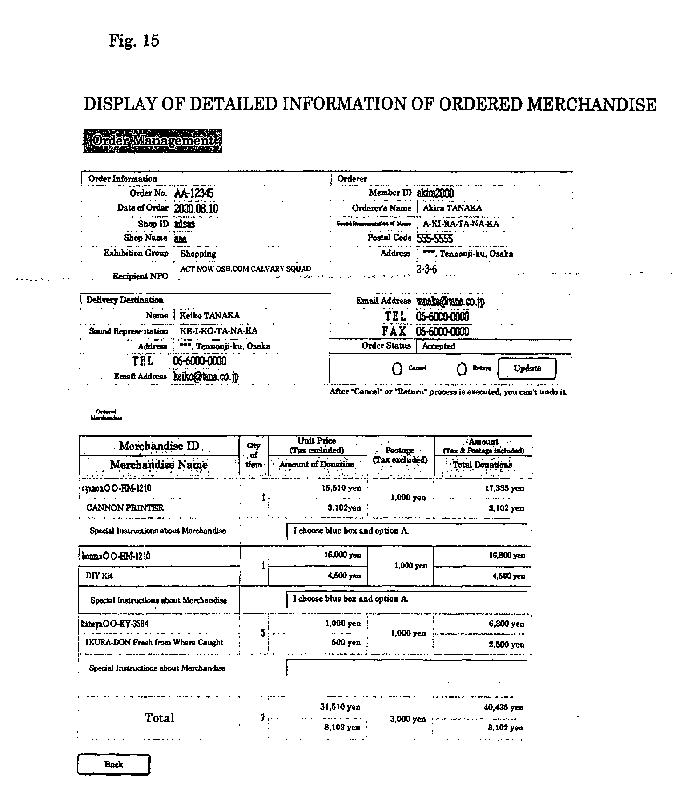

As shown in Fig. 15, the order-by-shopping management unit 146 performs a function of managing information of the merchandise ordered by the member by registering, for example, the order number, date of the order, exhibition group, shop ID, buyer ID, buyer's name, purchase amount, etc. and by searching for and displaying the registered information, and it records and manages the information in the order database unit 280. As shown in Fig. 15, the detailed information of the ordered merchandise includes order information (order number, date of the order, shop ID, shop name, exhibition group, and recipient NPO), an orderer(member ID, name of the orderer, sound representation of the name, postal code, address, e-mail address, telephone number, and facsimile number), order status (acceptance), delivery destination, ordered merchandise (merchandise ID, merchandise name, quantity of items, unit price, an amount of donation, postage, a total amount, total donations, and a special instruction about merchandise), etc.

The order-by-shopping management unit 146 performs a function of searching for data related to an order by shopping.

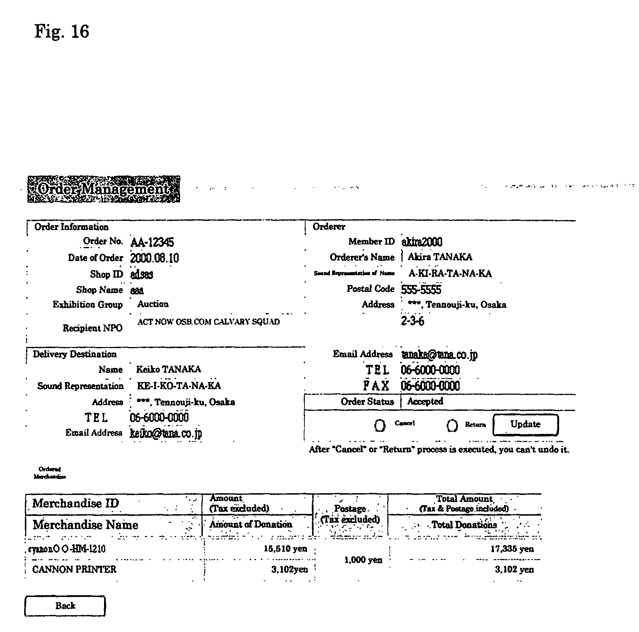

As shown in Fig. 16, like the above-described order-by-shopping management unit 146, the order-by-auction management unit 147 performs a function of managing order information, such as the content of an order by auction, orderer by auction, order status by auction, delivery destination, and merchandise ordered by auction, while managing the successful bid at auction, and it records and manages the information in the successful bid database unit 260.

With regard to the management of the successful bid at auction, a function of managing the shop name, auction close date, merchandise ID, merchandise name, bid count for individual merchandise, bid rate, opening bid, winning bidder ID, and contract price, and determining the winning bidder based on the bid period and the bid data is provided.

The order-by-auction management unit 147 performs a function of searching for data related to an order by auction.

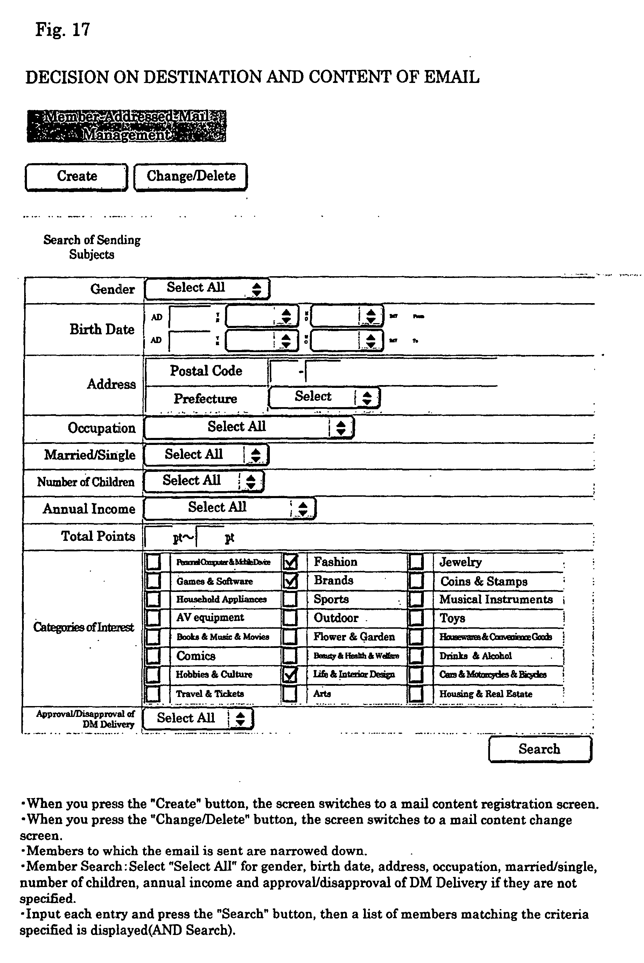

As shown in Fig. 17, the mail management unit 148 performs a function of managing e-mails addressed to the members, merchandise sellers, and NPOs by, for example, deciding the destination of e-mail and the content of e-mail, searching for members to whom e-mails are sent, completing an e-mail sending operation, and creating the content of e-mail addressed to the members, and it records and manages the information related to e-mails in the mail data database unit 400.

The mail management unit 148 performs a function of searching data related to e-mails.

It is arranged in such a manner that the members to whom e-mails are sent is searched for by an input entry out of the entries, such as gender, birth date, address, occupation, married/single, the number of children, annual income, total points, categories of interest, and approval/disapproval of DM delivery.

E-mails addressed to the members and introduced by the mail management unit 148 are sent to the members by the e-mail sending/receiving unit 180.

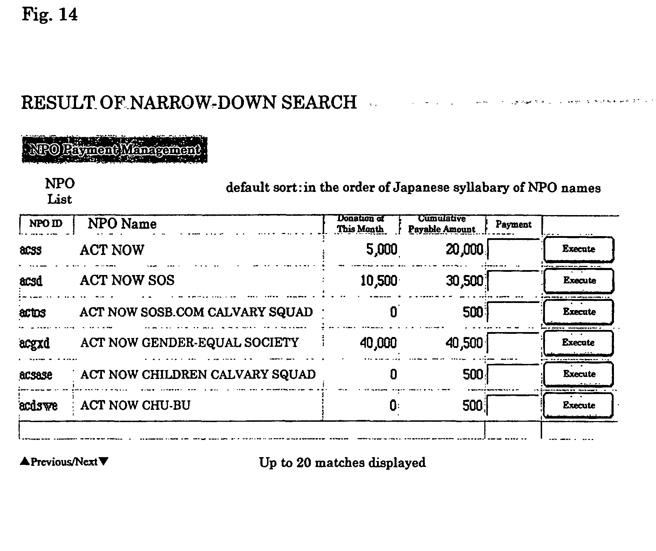

As shown in Fig. 14, the donation status management unit 149 performs a function of managing the information related to the payment of the donations to the NPOs, for example, an amount of donations of this month, a cumulative payable amount, and a cumulative paid amount for each NPO, and it records and manages the information in the donation status database unit 340.

The amount of donations of this month shows an amount of donations pooled to date in the month. A sum of the cumulative amount up to the previous month and the amount of donations of this month is displayed in the column of the cumulative payable amount. By inputting the amount paid to the NPO in the payment column and pressing the "Execute" button, a figure in the cumulative payable amount column is calculated again in accordance with the following equation:

$$\text{cumulative payable amount} = \text{cumulative payable amount} - \text{paid amount}.$$

The donation status management unit 149 performs a function of searching for data related to donations.

The deposit management unit 150 receives information of the successful bid database unit 260 and the order database unit 280 managed by the order-by-shopping management unit 146 and the order-by-auction management unit 147, and manages the information such as the donation subject organization name, ID, an amount of donations of each month, a cumulative payable amount, etc., so that it handles donations as the deposit (liabilities incurred by accepting a donation from the buyer of the merchandise, that is, a donor, and later delivering the donation to a donation subject organization like an NPO as a third party on behalf of the buyer of the merchandise).

The deposit management unit 150 performs a function of searching data related to the deposit.

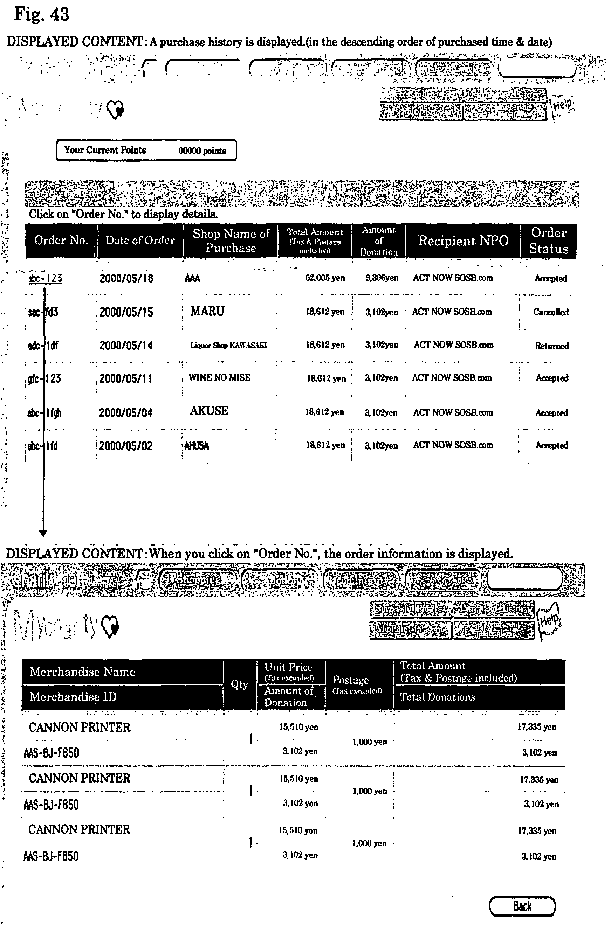

The purchase management unit 151 receives information of the successful bid database unit 260 and the order database unit 280 managed by the order-by-shopping management unit 146 and the order-by-auction management unit 147, and records and manages the order number, date of the order, shop name of purchase, a total amount (tax included and potage included), an amount of a donation, a recipient NPO, order status, information related to the ordered merchandise (merchandise name, merchandise ID, quantity of items, unit price (tax included), an amount of a donation, postage (tax excluded), an amount (tax included and postage included), and total donations), and the points for each member in the purchase database unit 420 (see Fig. 43).

One point is given per one yen for an amount of a donation, for example, and the points are accumulated for each member, so that a gift (merchandise or the like) will be presented to each member according to the accumulated points.

The purchase management unit 151 performs a function of searching data related to the purchase of merchandise for each member.

The WWW server 160 performs a function of creating various kinds of screens on the buyer terminal 700, merchandise seller terminal 500, and NPO terminal 600 and distributing various kinds of data, such as forms, based on the HTTP protocol. To be more specific, various kinds of screens used in browsing or inputting data and data for these screens are sent as the distribution data, including: data for displaying the descriptions of the merchandise for sale recorded in the merchandise database unit 240; data for displaying the description of the auctioned merchandise; data for displaying an input screen of the purchase offer data; data for displaying an input screen of bid data; data for displaying the data inputted from the buyer terminal 700, merchandise seller terminal 500, and NPO terminal 600 for confirmation, etc., which will be described in detail later.

The e-mail sending/receiving unit 180 performs a function of sending/receiving e-mail based on the SMTP protocol and the POP3 protocol. To be more specific, as e-mail to be sent or received, e-mail notifying the content of the contract among the merchandise seller and donation subject organization and the service provider, information of the NPO (thanks e-mail, etc.) addressed to the members, etc. are sent.

Next, the following description will describe the databases recording the information of the shopping system 110.

The merchandise database unit 240 stores the data of the merchandise descriptions of the merchandise for sale or for auction in the shopping mall server 120, plus the data of an amount of a donation to be given to a donation recipient organization included in the sale price when the merchandise is on sale by shopping, and the data indicating a ratio of an amount of a donation to be given to a donation recipient organization with respect to the contract price when the merchandise is on sale at auction.

In the merchandise database unit 240, the merchandises code, merchandise name, sound representation, merchandise category, search keyword, explanation of the merchandise, specification/explanatory description, price, postage, a percentage of a donation, and a percentage of the net operating expenses are recorded. Further, in the case of the auctioned merchandise, the opening bid, bid rate, and auction period (open date and close date) are recorded in addition to the foregoing data.

Herein, the merchandise data provided as needed by the merchandise seller from the merchandise seller terminal 500 via the WWW server 160 is recorded and managed in the merchandise database unit 240 by the shop information management unit 143.

The successful bid database unit 260 stores data as to the contract price of the merchandise for sale at auction, personal information of the winning bidder, such as his name and address, the payment method, etc. which is recorded and managed by the order-by-auction management unit 147. Also, the successful bid database unit 260 performs a function of storing and managing bid data placed by bidders.

For example, the recorded successful bid information includes order information (order number, date of the order, shop ID, shop name, exhibition group, and recipient NPO), orderer(member ID, name of the orderer, sound representation of the name, postal code, address, e-mail address, telephone number, and facsimile number), delivery destination (name, sound representation, address, telephone number, and e-mail address), order status (acceptance), and ordered merchandise information (merchandise ID, merchandise name, quantity of items, unit price, an amount of a donation, postage, an amount, and total donations), plus the information specific to auction (shop name, close date, merchandise ID, merchandise name, bid count, bid rate, opening bid, winning bidder ID, and contract price).

The order database unit 280 stores data including the information of the merchandise ordered by shopping, the personal information of the buyer, such as his name and address, the payment method, etc., which is recorded and managed by the order-by-shopping management unit 146. The stored information is the purchase offer data inputted from a screen (interface) provided by the WWW server 160 to input the purchase offer data.

The purchase offer data stored in the order database unit 280 is browsed by the merchandise seller terminal 500 the merchandise seller uses, and is used when the merchandise seller confirms the content of an order.

The order information includes the order information (order number, date of the order, shop ID, shop name, exhibition group, and recipient NPO), orderer(member ID, name of the orderer, sound representation of the name, postal code, address, e-mail address, telephone number, and facsimile number), delivery destination (name, sound representation, address, telephone number, and e-mail address), order status (acceptance), and ordered merchandise information (merchandise ID, merchandise name, the quantity of items, unit price, an amount of a donation, postage, an amount, and total donations).

The membership database unit 300 stores information that is specific to each member as data, including the name or corporation name, address, URL of the web page, contact e-mail address, etc. of the buyer registered with the shopping mall server 120 as a member, which is recorded and managed by the membership management unit 144.

The data stored in the membership database unit 300 is the data inputted by the buyer from the buyer terminal 700 on the screen provided by the WWW server 160 for the membership information registration, or the data inputted by the manager of the shopping mall server 120.

The membership information includes the name, sound representation, nickname, member ID, password, gender, birth date, telephone number, facsimile number, address, member's e-mail address, URL of the member's own web page, occupation, married/single, the number of children, annual income, categories of interest, approval/disapproval of DM delivery, etc.

The merchandise seller database unit 310 stores information specific to each merchandise seller, including the name or corporation name, address, URL of the web page, contact e-mail address, etc. of the merchandise seller registered with the shopping mall server 120, which is recorded and managed by the shop information management unit 143.

The data stored in the merchandise seller database unit 310 is the data inputted by the merchandise seller from the screen provided to the merchandise seller terminal 500 by the WWW server 160 for the merchandise seller information registration, or the data inputted by the manager of the shopping mall server 120.

The merchandise seller information includes the shop name, sound representation, shop ID, password, shop category, telephone number, facsimile number, address, name of the representative, name of a department in charge, name of a person in charge, e-mail address of the person in charge, URL, search keyword, profile of the shop, contact e-mail address, and open/closed setting.

The settlement information database unit 320 stores data related to the payment made by the buyer for the merchandise for sale by shopping and for sale at auction received from the settlement system 800, for example, the payment handling agent server 810, which is recorded and managed by the purchase management unit 151.

To be more specific, the stored data includes data indicating the payment status of the buyer (buyer's name, buyer's number, order number, date of the purchase, date of the payment, settled or unsettled, etc.), which is browsed by the merchandise seller terminal 500 the merchandise seller uses and is used when the merchandise seller confirms the payment status. When the merchandise seller confirms the payment status, it is arranged in such a manner that the identity of the merchandise seller is authenticated with the ID and password assigned to the merchandise seller in advance, so that data irrelevant to the identified merchandise seller will not be browsed.

It may be arranged in such a manner that the data indicating the payment status of the buyer is recorded and managed by receiving data from the settlement system 800, for example, the payment handling agent server 810.

The donation status database unit 340 stores an amount of a donation accrued when the buyer purchases the merchandise or the merchandise seller sells the merchandise, and an actual giving condition of donations, which are recorded and managed by the order-by-shopping management unit 146, order-by-auction management unit 147, and NPO management unit 145. The data stored in the donation status database unit 340 is provided to the buyer and the merchandise seller by being displayed on the screen of the buyer terminal 700 while the buyer accesses the shopping mall server 120 or by being displayed on an arbitrary confirmation screen.

The donation subject organization database unit 360 stores various kinds of data related to the donation recipient organizations, which is recorded and managed by the NPO management unit 145. The stored data includes the text data and picture data, etc. explaining the content of activities of the organizations, plus URLs and the like when the organizations have the Internet web page.

The donation subject organization information includes the name of NPO, sound representation, NPO ID, password, NPO category, telephone number, facsimile number, address, name of the representative, name of a department in charge, name of a person in charge, e-mail address of the person in charge, URL, profile of the NPO, thanks message, contact e-mail address, and acceptance/non-acceptance of donations.

The deposit database unit 380 records the information as to the donation subject organization name, ID, an amount of donations in each month, cumulative payable amount, etc., so that it handles a donation as the deposit (liabilities incurred by accepting a donation from the buyer of the merchandise, that is, a donor, as a retained money, and later delivering the donation to a donation subject organization like an NPO as a third party on behalf of the buyer of the merchandise), which is recorded and managed by the deposit management unit 150.

The mail data database unit 400 records data related to e-mails managed by the mail management unit 148, for example, decision on the destination of an e-mail and the content of an e-mail, a search for the members for sending e-mails, completion of an e-mail sending operation, and creation of the content of an e-mail addressed to the members, which is recorded and managed by the mail management unit 148.

The purchase database unit 420 records the order number, date of the order, shop name of purchase, a total amount (tax included and postage included), an amount of a donation, a recipient NPO, order status, information related to the ordered merchandise (merchandise name, merchandise ID, quantity of items, unit price (tax included), an amount of a donation, postage (tax excluded), an amount (tax included and postage included), and total donations), and points (see Fig. 43) for each member, which is managed by the purchase management unit 151.

The merchandise seller terminal 500 performs a function of sending/receiving e-mail to/from an arbitrary e-mail server (not shown) based on the SMTP protocol and the POP3 protocol. Herein, a workstation or a personal computer provided with communication equipment linkable to the network 100, such as the Internet, and pre-installed with the WWW browser application and the e-mail client application is preferably used as the merchandise seller terminal 500.

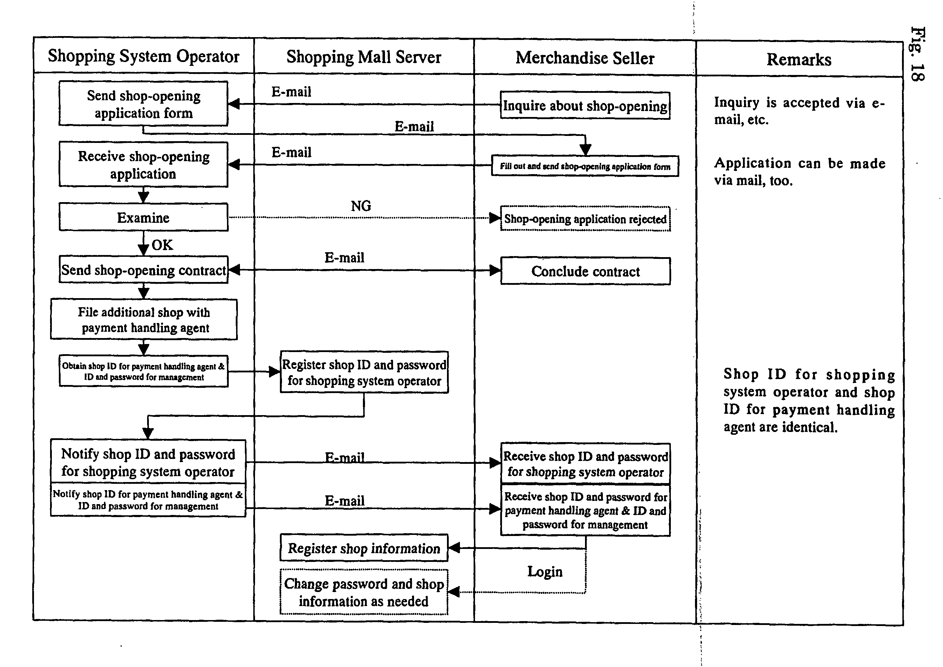

In order to register the merchandise seller (shop), the registration procedure is conducted as shown in Fig. 18.

For example, when the shopping system operator receives e-mail inquiring about opening a shop from the merchandise seller terminal 500 of a person who wishes to sell merchandise, the shopping system operator returns a shop-opening application form via e-mail from the shopping mall server 120. The person who wishes to sell the merchandise inputs information into the shop opening-application form by the merchandise seller terminal 500, and returns the same to the shopping mall server 120. Then, the shopping system operator conducts a predetermined examination and decides whether the shop is allowed to open or not, and returns a shop-opening contract document to the person who wishes to sell the merchandise by opening a shop, and concludes the shop-opening contract. Subsequently, the shopping system operator obtains an ID and a password for the payment handling agent server 810 in the settlement system 800 assigned to the contracting merchandise seller, and records and manages the same in the shopping mall server 120, while registering the ID and password for the shopping mall server 120. Further, the shopping system operator sends the ID and password for the payment handling agent server 810 and the ID and password for the shopping mall server 120 to the merchandise seller terminal 500, while recording and managing the same by the shop information management unit 143 in the shopping mall server 120.

Like the buyer terminal 700, the merchandise seller terminal 500 accesses the shopping mall server 120 via the network 100, such as the Internet, and performs a function of registering data of the merchandise descriptions of the shopping merchandise and the auctioned merchandise with the shopping mall server 120, confirming the content of an order, confirming the payment status, and inputting the delivery status of the merchandise.

Herein, by sending computer software and/or input screens from the shopping mall server 120, an authentication unit 501, a shop information management unit 502, a merchandise information management unit 503, an auctioned merchandise information management unit 504, a shopping order management unit 505, and an auction successful bid management unit 506 are also provided to the merchandise seller terminal 500. In particular, the merchandise information management unit 503 and the order-by-auction management unit 505 are the functions provided by the shop information management unit 143 in the shopping mall server 120.

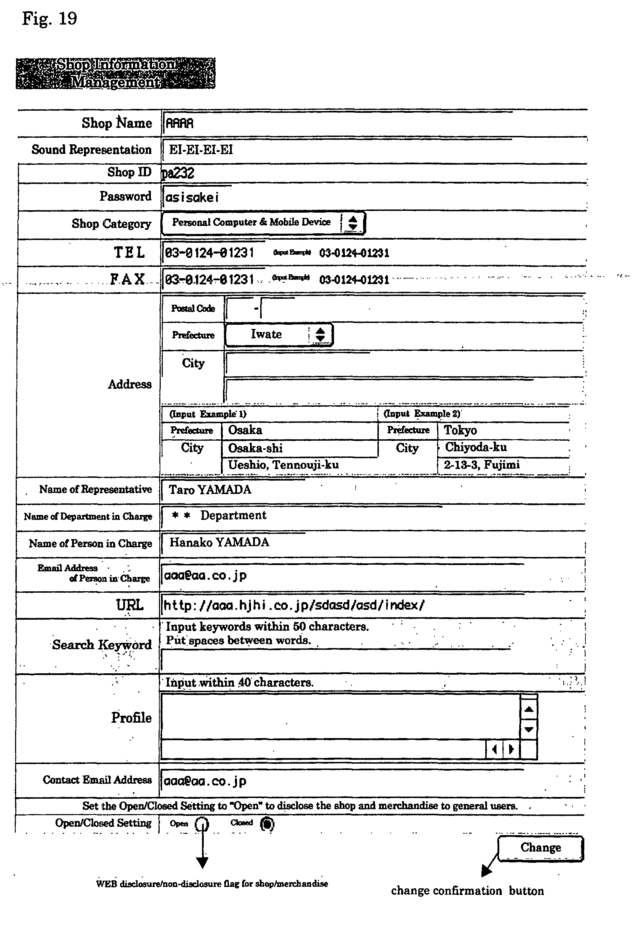

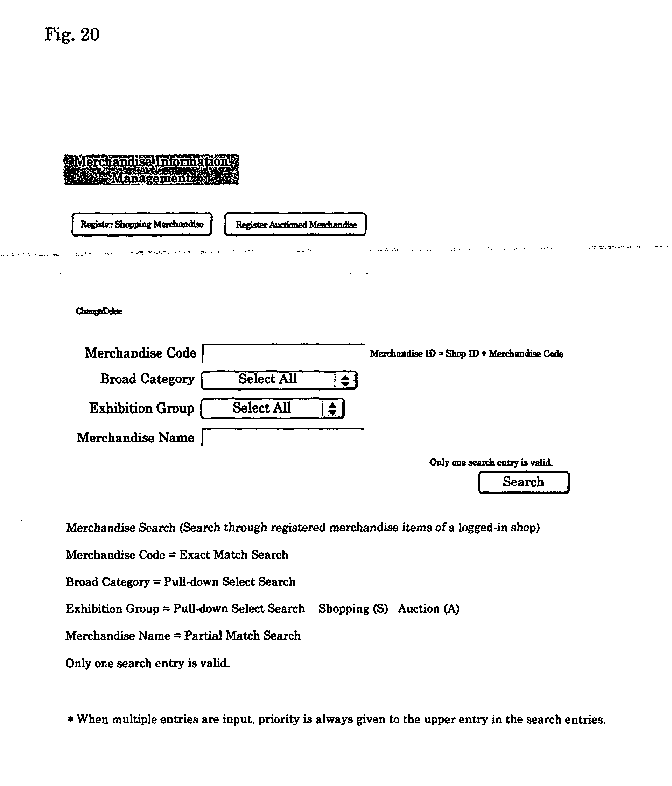

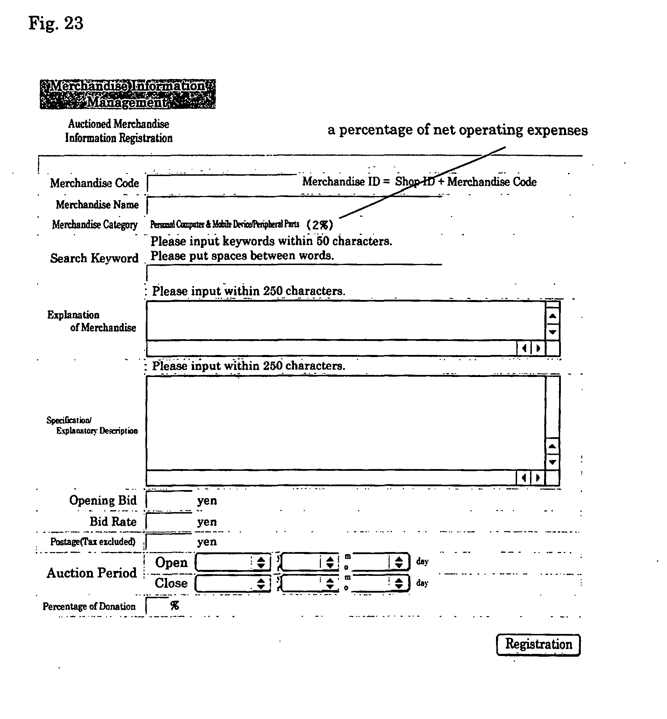

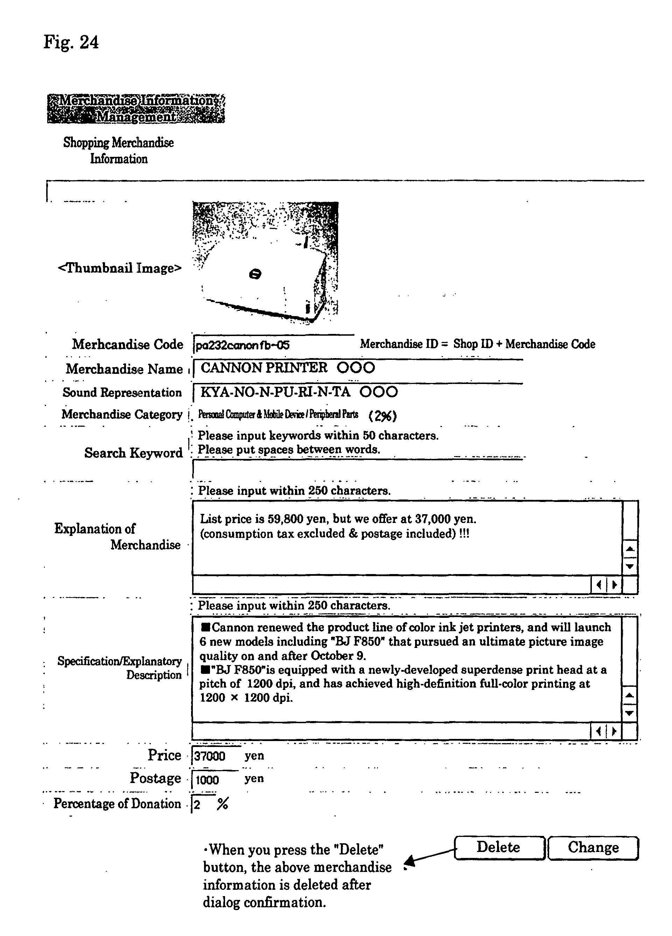

In the present preferred embodiment, it is arranged in such a manner that the merchandise seller terminal 500 accesses the shopping mall server 120, and by inputting information correspondingly to the screens sent by the WWW server 160 in the shopping mall server 120, the merchandise seller terminal 500 functions as the authentication unit 501 with an authentication screen, as the shop information management unit 502 with a shop information management screen (shown in Fig. 19), as the merchandise information management unit 503 with a shopping merchandise information management screen (shown in Figs. 20, 21, and 22), as the auctioned merchandise information management unit 504 with an auctioned merchandise information management screen (shown in Fig. 23), as the shopping order management unit 505 with a shopping order management screen (shown in Fig. 24), and as the auction successful bid management unit 506 with an auction successful bid management screen (shown in Fig. 27).

The shop manager inputs the manager ID and password in response to a manger authentication screen (not shown) sent to the merchandise seller terminal 500 from the shopping mall server 120 by the WWW server 160, and presses the login button, which allows the manager to log in by the shop manager's authorization based on the authorization type.

When new shop information is registered, data of the shop name, sound representation, shop ID, password, shop category, telephone number, facsimile number, address, name of the representative, name of a department in charge, name of a person in charge, e-mail address of the person in charge, URL, search keyword, profile of the shop, contact e-mail address, and open/closed setting (the shop and merchandise will be open to the members by switching the open/closed setting to "open") is inputted into the shop information management screen (shown in Fig. 19) sent by the WWW server 160 from the shop information management unit 143 in the shopping mall server 120 and then displayed. Also, the already registered information can be changed.

Then, the foregoing information is recorded and managed in the merchandise seller database unit 310.

The merchandise information is managed with a merchandise information management screen (shown in Fig. 20) sent by the WWW server 160 from the shop information management unit 143 in the shopping mall server 120, and it is arranged in such a manner that either "Register Shopping Merchandise" or "Register Auctioned Merchandise" can be selected, whereby the merchandise information can be managed correspondingly to each case.

Also, in case that the already registered merchandise is changed or deleted, it is arranged in such a manner that a search is conducted by inputting entries including the merchandise code, broad category, exhibition group, and merchandise name on the merchandise information management screen (shown in Fig. 20).

In case that new shopping merchandise is registered, "Register Shopping Merchandise" is selected on the merchandise information management screen (shown in Fig. 20) sent by the WWW server 160 from the shop information management unit 143 in the shopping mall server 120.

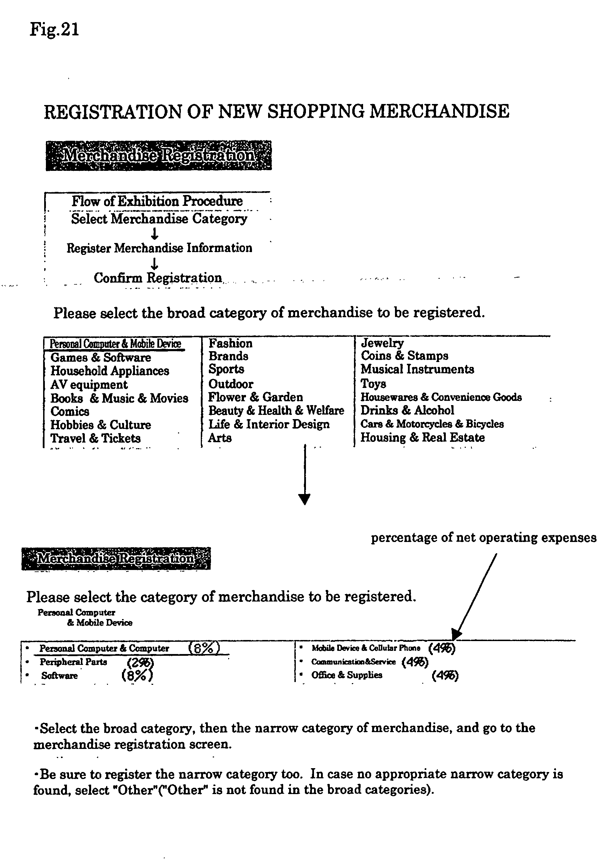

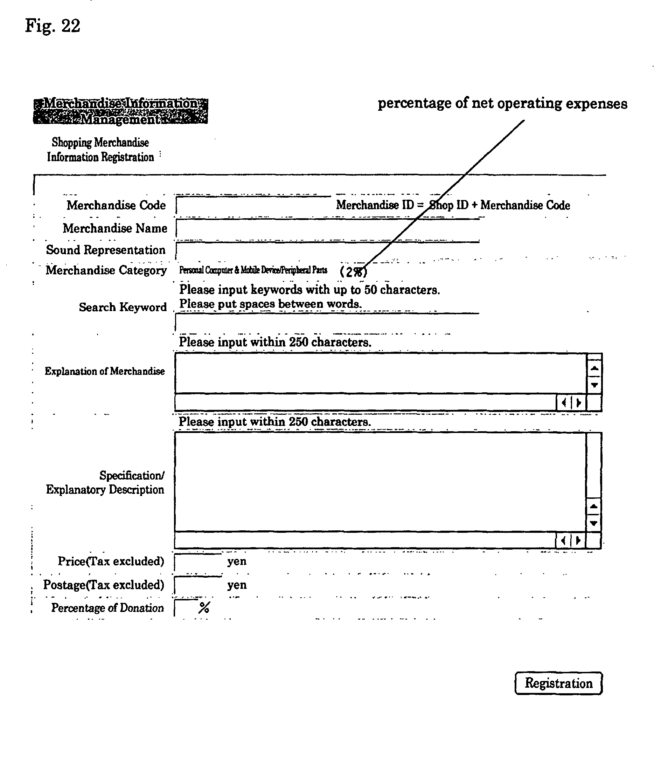

Then, as shown in Fig. 21, the broad category of the merchandise to be registered ("Personal Computer & Mobile", "Games & Software", etc.) is selected first, and then, a narrow category belonging to the selected broad category is selected, for example, for "Personal Computer & Mobile Device" as the broad category, a selection is made from "Personal Computer & Computer", "Peripheral Parts", "Software", "Mobile Device & Cellular Phone", "Communication & Service", and "Office & Supplies", and then the screen goes to the merchandise information registration screen (shown in Fig. 22).

Then, the merchandise information is registered by the merchandise information registration screen (shown in Fig. 22) sent by the WWW server 160 from the shop information management unit 143 in the shopping mall server 120, and the merchandise code, merchandise name, sound representation, merchandise category, search keyword, explanation of the merchandise, specification/explanatory description, price, postage, thumbnail image, merchandise image, and a percentage of a donation are inputted and managed. The foregoing information is recorded in the merchandise database unit 240 and managed by the shop information management unit 143 in the shopping mall server 120.

When new auctioned merchandise is registered, by selecting "Register Auctioned Merchandise" on the merchandise information management screen (shown in Fig. 20) sent by the WWW server 160 from the shop information management unit 143 in the shopping mall server 120, the screen goes to a new auctioned merchandise registration screen.

In the same manner as the registration of new shopping merchandise, a new auctioned merchandise is registered by selecting the merchandise category, registering the merchandise information, and confirming the registration on the new auctioned merchandise registration screen (shown in Fig. 23) sent by the WWW server 160 from the shop information management unit 143 in the shopping mall server 120. In the auctioned merchandise registration, the merchandise code, merchandise name, merchandise category, search keyword, explanation of the merchandise, specification/explanatory description, thumbnail image, merchandise image, opening bid, bid rate, postage, auction period (open date and close date), and a percentage of a donation are inputted on the new auctioned merchandise registration screen (shown in Fig. 23).

The foregoing information is recorded in the merchandise database unit 240 and managed by the shop information management unit 143 in the shopping mall server 120.

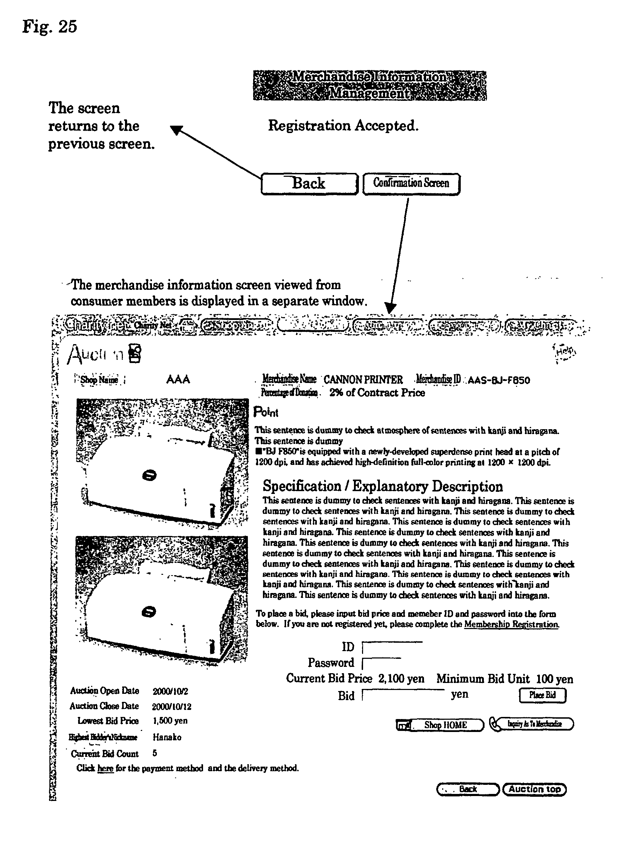

The information of the merchandise registered as the shopping merchandise and as the auctioned merchandise is confirmed on a shopping merchandise information confirmation screen (shown in Fig. 24) or an auctioned merchandise information confirmation screen (shown in Fig. 25) sent by the WWW server 160 from the order-by-shopping management unit 146 in the shopping mall server 120.

When the information of the ordered merchandise is searched, by inputting the order number and the date of the order on an order management screen (shown in Fig. 26), which is sent by the WWW server 160 from the order-by-shopping management unit 146 in the shopping mall server 120 and then displayed, a list of the order including the order number, date of the order, exhibition group, shop ID, shop name, buyer ID, buyer's name, and a total amount can be obtained.

As the detailed information of individual ordered merchandise, as shown in Fig. 15, the order information (order number, date of the order, shop ID, shop name, exhibition group, and recipient NPO), orderer(member ID, name of the orderer, sound representation of the name, postal code, address, e-mail address, telephone number, and facsimile number), delivery destination (name, sound representation, address, telephone number, and e-mail address), order status (acceptance), and ordered merchandise information (merchandise ID, merchandise name, quantity of items, unit price, an amount of a donation, postage, an amount, and total donations) are displayed. "Shopping" is displayed as the exhibition group.

The ordered merchandise information is recorded in the order database unit 280 and managed by the order-by-shopping management unit 146 in the shopping mall server 120.

Also, as shown in Fig. 16, as the auction order management information, the aforementioned order information, orderer, delivery destination, order status, and ordered merchandise information are displayed, and "Auction" is displayed as the exhibition group.

As to the search of the successful bid status at auction, a list of successful bids at auction (shown in Fig. 27) can be obtained by inputting the close date of the auction. As the successful bid information, the shop name, close date, merchandise ID, merchandise name, bid count, bid rate, opening bid, wining bidder ID, and contract price are displayed.

The foregoing successful bid information is recorded in the successful bid database unit 260 and managed by the order-by-auction management unit 147 in the shopping mall server 120.

The NPO terminal 600 performs a function of sending/receiving e-mail to/from an arbitrary e-mail server (not shown) based on the SMTP protocol and the POP3 protocol. Herein, a workstation or a personal computer provided with communication equipment linkable to the network 100, such as the Internet, and pre-installed with the WWW browser application and the e-mail client application is used as the NPO terminal 600.

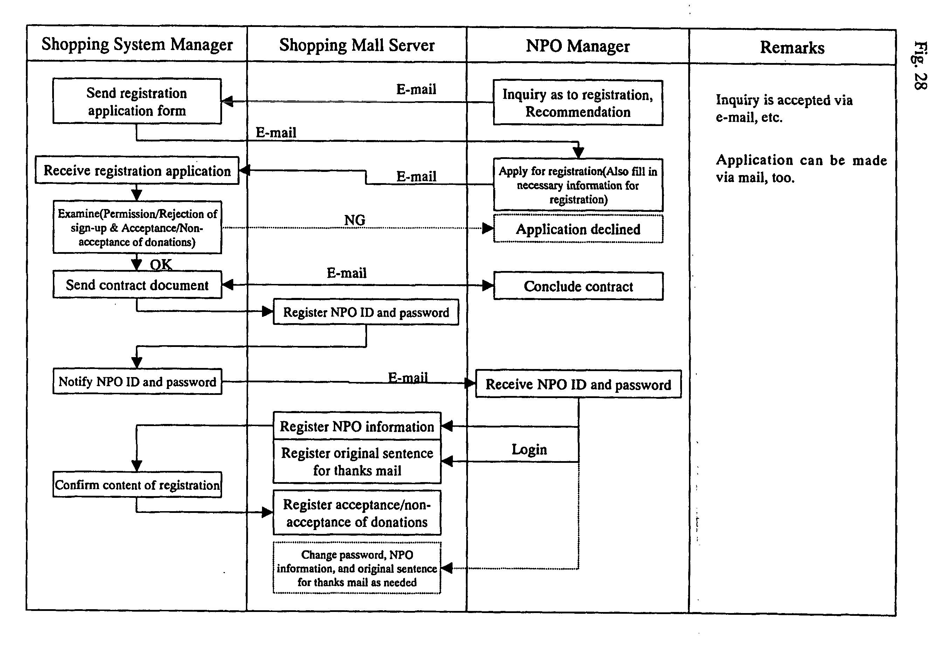

An NPO as a donation subject organization is registered in the manner shown in Fig. 28.

For example, upon receipt of an inquiry about the registration from an NPO, the shopping system operator returns a registration application form to the NPO terminal 600 from the shopping mall server 120. Then, the NPO inputs the predetermined entries of the received registration application form, and returns the same to the shopping mall server 120. Subsequently, the shopping system operator conducts a predetermined examination and decides whether the NPO is allowed to sign-up or not and whether a donation is acceptable or not, and if the NPO is allowed to sign-up and a donation is acceptable, it returns a contract document to the NPO and concludes the contract with the NPO. Then, the shopping system operator registers the ID and password of the contracting NPO with the shopping mall server 120, and sends the ID and password to the NPO terminal 600 while recording and managing the ID and password by the NPO management unit 145 in the shopping mall server 120.

Like the buyer terminal 700, the NPO terminal 600 as a donation subject terminal accesses the shopping mall server 120 via the network 100, such as the Internet, and performs a function of registering new NPO information (NPO name, NPO ID, NPO category, profile of the NPO, acceptance/non-acceptance of donations) with the shopping mall server 120, changing the content of the registration, and managing the received donations.

It may be arranged in such a manner that, of all the NPO information, the acceptance/non-acceptance of donations, for example, is registered, changed, and deleted only by the NPO management unit 145 in the shopping mall server 120.

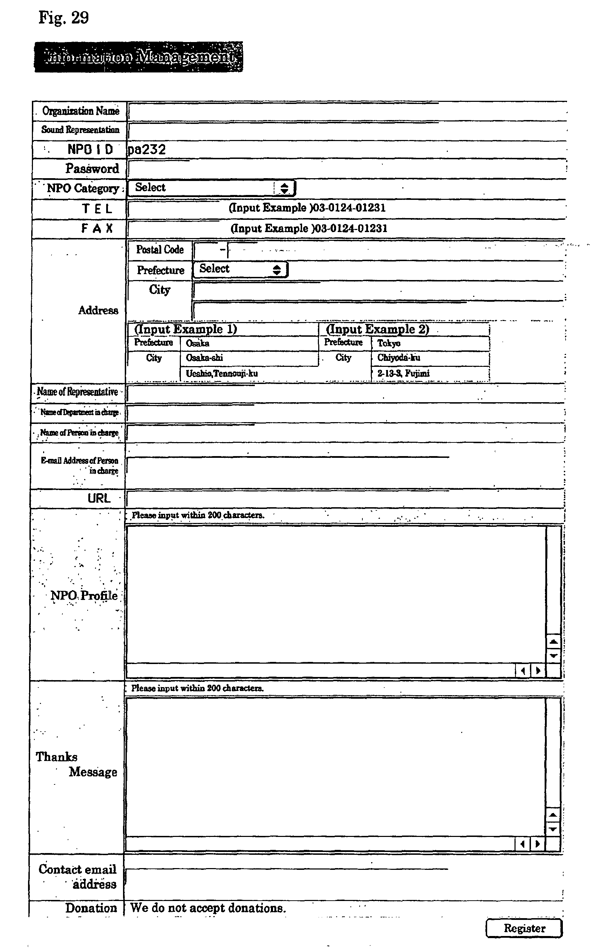

The NPO terminal 600 accesses the shopping mall server 120 via the network 100, such as the Internet, and computer software and/or an authentication screen, an information management screen (shown in Fig. 29), and a received donation management screen are sent from the shopping mall server 120, whereby an NPO manager authentication function unit 601, an NPO information management unit 602, and a received donation management unit 603 are provided. In the present preferred embodiment, it is arranged in such a manner that, by inputting information correspondingly to the screens sent by the WWW server 160 from the shopping mall server 120, the NPO terminal 600 functions as the authentication unit 601 with the authentication screen, as the NPO information management unit 602 with the information management screen, and as the received donation management unit 603 with the received donation management screen.

The NPO information is managed by the NPO management unit 145 in the shopping mall server 120, and by inputting the ID and password of the NPO manager and pressing the login button, the NPO manager is allowed to log in by the NPO manager's authorization.

In regard to the NPO information management, when a new NPO is registered by the NPO terminal 600, as shown in Fig. 29, the organization name, sound representation, NPO ID, password, NPO category, telephone number, facsimile number, address, name of the representative, name of a department in charge, name of a person in charge, e-mail address of the person in charge, URL, profile of the NPO, thanks message, contact e-mail address, and acceptance/non-acceptance of donations are inputted and managed. In addition, the foregoing information may be changed and managed.

It may be arranged in such a manner that, of all the NPO information, for example, the acceptance/non-acceptance of donations is registered, changed, and deleted only by the NPO management unit 145 in the shopping mall server 120.

The foregoing NPO information is recorded in the donation subject organization database unit 360 and managed by the NPO management unit 145 in the shopping mall server 120.

An amount of a donation corresponding to the merchandise purchased by the buyer terminal 700 is managed by the received donation management unit 603.

By managing the NPO's received donations, it is possible to confirm an amount of received donations of this month and a cumulative payable amount at the mall manager side by checking an amount of donations of this month and a cumulative payable amount.

The foregoing information is recorded in the donation status database unit 340, donation subject organization database unit 360, and deposit database unit 380, and managed by the donation status management unit 149 in the shopping mall server 120.

The buyer terminal 700 is installed at a person who wishes to do the shopping and attend an auction, and it accesses the shopping mall server 120 via the network 100, such as the Internet, and performs a function of browsing the descriptions of the merchandise registered with the shopping mall server 120, and inputting purchase offer data, such as the buyer's name and address and the payment method when a purchase offer is submitted, and inputting the bid information when a bid is placed at an auction. The buyer terminal 700 is of the same arrangement as the buyer terminal 12 discussed above.

A member of the shopping system, that is, a consumer, is registered by inputting information on a membership registration screen sent to the buyer terminal 700 by the WWW sever 160 from the membership management unit 144 in the shopping mall server 120.

The name, sound representation, nickname, member ID, password, gender, birth date, telephone number, facsimile number, address, and member's e-mail address are inputted on the membership registration screen as essential input entries, and as optional input entries, URL of the member's own web page, occupation, married/single, the number of children, annual income, categories of interest, and approval/disapproval of DM delivery are inputted.

Prior to the membership registration, a person who wishes to be registered as a member must read the use regulations for shopping members, and selects whether he agrees or disagrees with the use regulations by a check button, and the registration is completed when he or she presses the "I Agree & Register" button.

The foregoing information thus inputted is recorded in the membership database unit 300 and managed by the membership management unit 144 in the shopping mall server 120.

Next, the following description will describe an operation of the shopping system to which the method of purchasing merchandise over a network of a preferred embodiment of the present invention is applied.

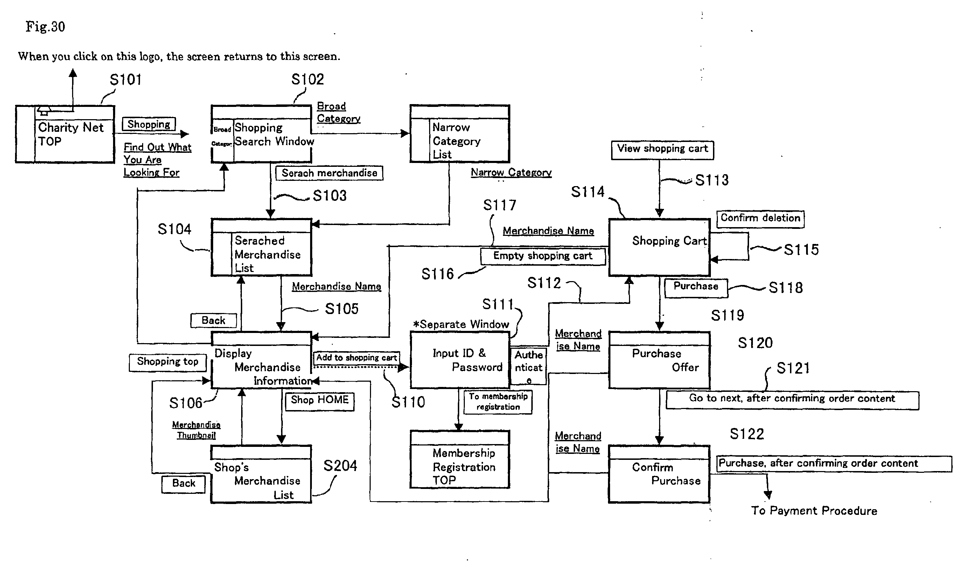

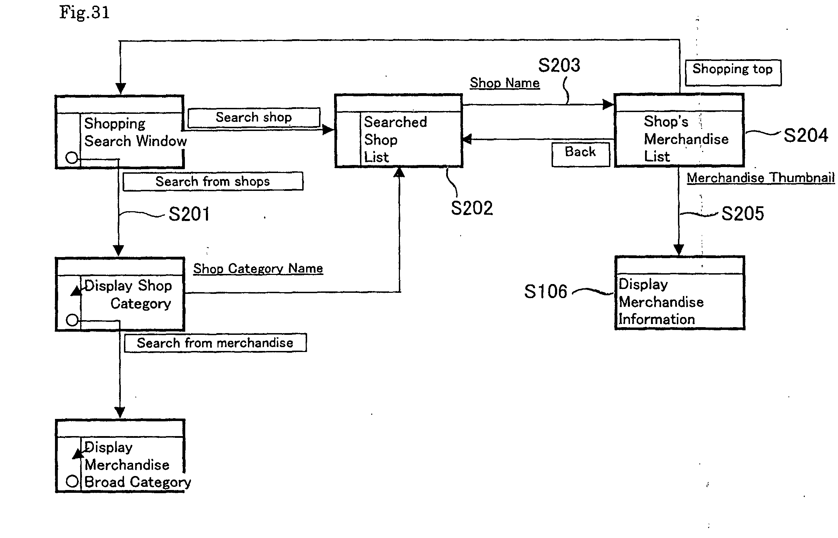

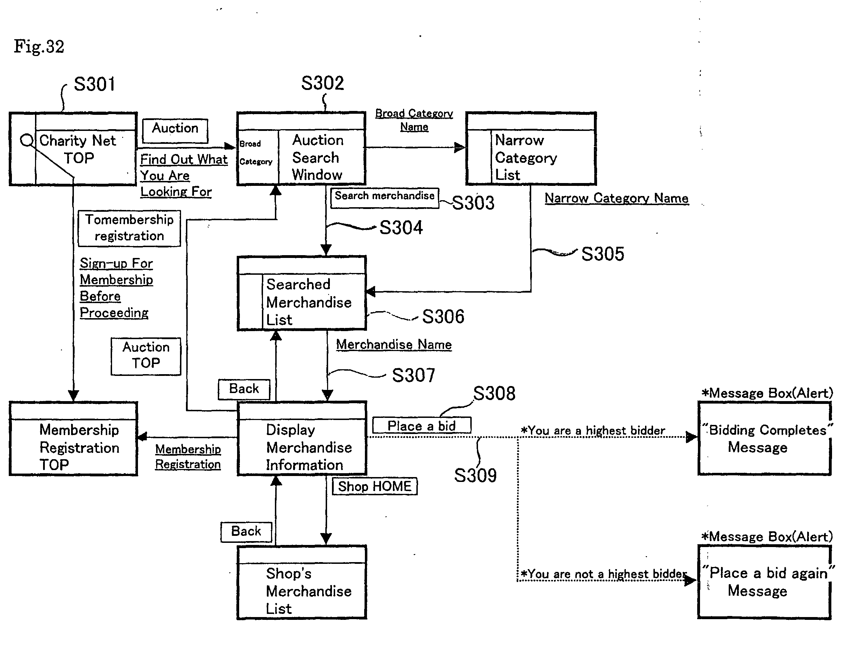

Fig. 30 is a flow view showing a flow (part 1) of shopping. Fig. 31 is a flow view showing a flow (part 2) of shopping. Fig. 32 is a flow view showing a flow of an auction.

Initially, the merchandise is registered with the screen sent to the merchandise seller terminal 500 by the WWW server 160 from the mall management unit 142 and the shop information management unit 143 in the shopping mall server 120, that is, the merchandise for shopping or the merchandise for auction is registered by companies operating the shops, after which the merchandise is purchased.

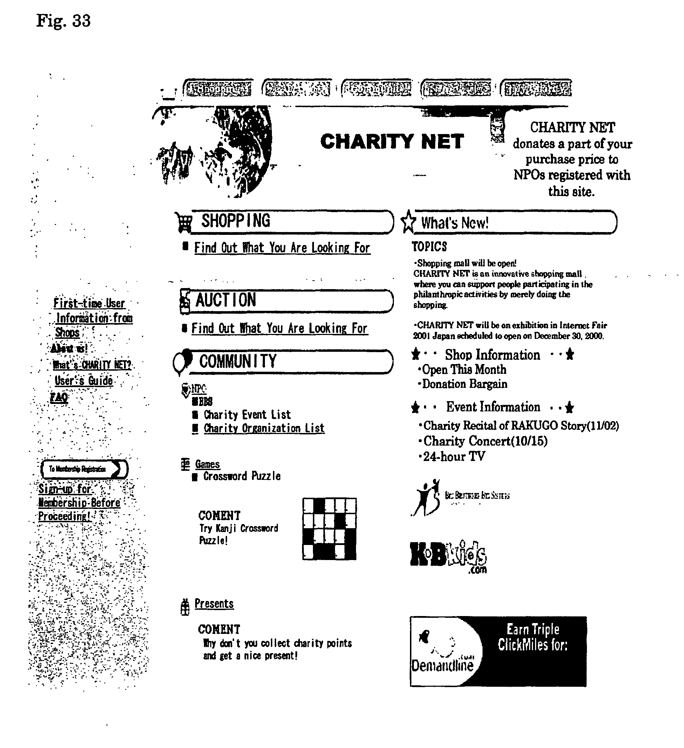

Then, the top page (shown in Fig. 33) is sent to the buyer terminal 700 by the WWW server 160 from the membership management unit 144 in the shopping mall server 120, and the buyer selects whether he or she wishes shopping or auction by checking a "Shopping" button or an "Auction" button in the top page (Step S101).

As to the membership registration, by checking a "To Membership Registration" button on the top page, the membership registration is completed by the membership management unit 144 in the shopping mall server 120. In any case, the membership registration is a precondition to purchase the merchandise by shopping or at auction.

When the buyer purchases the merchandise by the method of purchasing merchandise over a network according to a preferred embodiment of the present invention, if the buyer wishes to view a list of organizations to which he or she can make a donation, he or she clicks on a "Charity Organization List" button, which allows the buyer to view the NPOs through a search screen for the registered NPOs, which is sent by the WWW server 160 from the NPO management unit 145 in the shopping mall server 120.

Next, the following description will describe a case where the merchandise is purchased by shopping.

Initially, when the buyer clicks on the "Shopping" button on the top page (shown in Fig. 33) sent to the buyer terminal 700 from the shopping mall server 120, a shopping merchandise search screen is sent to the buyer terminal 700 (Step S102), on which four search methods are displayed. That is, there are a merchandise keyword search (AND search by multiple entry from the keyword, a percentage of a donation, and a broad category), a shop keyword search (AND search by multiple entry from the keyword and the shop category), a merchandise category search (narrowing down from the broad category to the narrow category of the merchandise), a shop category search (narrowing down from the shop category to a shop).

The merchandise categories include, for example, "Personal Computer & Mobile Device", "Flower & Garden", "Drinks & Alcohols", "Beauty & Health & Welfare", "Fashion", "Cars & Sports & Outdoor", "Travel & Tickets", "Books & Music & Movies", "Food", "Life & Interior Design", "Hobbies & Culture", and "Services".

The shop categories include the same categories as those of the merchandise categories.

When the shopping is done by the merchandise keyword search, the procedure will proceed in accordance with the flowchart shown in Fig. 30.

Initially, a search entry input screen is sent to the buyer terminal 700 by the WWW server 160 from the shop information management unit 143 in the shopping mall server 120.

Then, a search entry is inputted on the screen sent to the buyer terminal 700. As an input into the search entry, the buyer inputs information into a keyword input form, and specifies a percentage of a donation and the merchandise category from the pull-down menu, and presses a "Search Merchandise" button (Step S103). The search can be conducted by a multiple entry search (AND search) from the keyword, a percentage of a donation, and the merchandise category. Also, the search can be conducted independently for each of the keyword, a percentage of a donation, and the merchandise category.

The search result of the search by the shop information management unit 143 in the shopping mall server 120 is sent to the buyer terminal 700 by the WWW server 160 from the shopping mall server 120.

As the search result, for example, the merchandise name, price, a standard percentage of a donation, and the shop name are displayed on a searched merchandise list screen (Step S104). In particular, the merchandise items that fall into the search entry are displayed in the order of percentages of a donation by the default sort.

In the case of the merchandise category search, that is, when the shopping is done by the narrowing search from the merchandise category, the search entry input screen is sent to the buyer terminal 700 by the WWW server 160 from the shop information management unit 143 in the shopping mall server 120.

Then, the buyer inputs a search entry on the screen sent to the buyer terminal 700. Herein, the buyer first clicks on the hyperlink text with the broad category name of the merchandise he or she wishes to search.

The search result of the search by the shop information management unit 143 in the shopping mall server 120 is sent to the buyer terminal 700 in the form of a search result output screen by the WWW server 160 from the shopping mall server 120.

As the search result, the narrow categories belonging to the selected category, for example, in the case of a search by the broad category name of "Personal Computer & Mobile Device", "Personal Computer & Computer", "Mobile Device & Cellular Phone", "Software", "Peripheral Parts", "Communication Service", and "Office & Supplies" are displayed as the corresponding narrow categories. Further, by clicking on the narrow category name, the merchandise belonging to that category is displayed.

As the searched merchandise, the merchandise name, price, a standard percentage of a donation, and shop name are displayed on the searched merchandise list screen.

Also, when the shopping is done by the shop keyword search, the procedure proceeds in accordance with a flow shown in Fig. 31.

Initially, the search entry input screen is sent to the buyer terminal 700 by the WWW server 160 from the shop information management unit 143 in the shopping mall server 120.

By specifying the shop category from the pull-down menu by the buyer terminal 700, the AND search by the keyword and the shop category can be conducted (Step S201).

The search result of the search by the shop information management unit 143 in the shopping mall server 120 is displayed by the WWW browser 160 in the form of a list of shops that fall into the search entry in the order of Japanese syllables or characters of the shop names on a searched shop list screen.

In the case of the shop category search, that is, the narrowing search from the shop category, by clicking on the hyperlink text with the category name of the shop the buyer wishes to search on the search entry input screen sent to the buyer terminal 700 by the WWW server 160 in the shopping mall server 120, the search result of the search by the shop information management unit 143 in the shopping mall server 120 is displayed in the form of a list of shops belonging to the selected category on the searched shop list screen (Step S202).

The search result of the search by the shop information management unit 143 in the shopping mall server 120 is sent to the buyer terminal 700 in the form of the search result output screen by the WWW server 160 in the shopping mall server 120.

The search result is displayed in the order of Japanese syllables or characters of the shop names by the default sort.

By clicking on the shop name on the searched shop list screen (Step S203), a shop's merchandise list screen is displayed by the shop information management 143 in the shopping mall server 120 (Step S204).

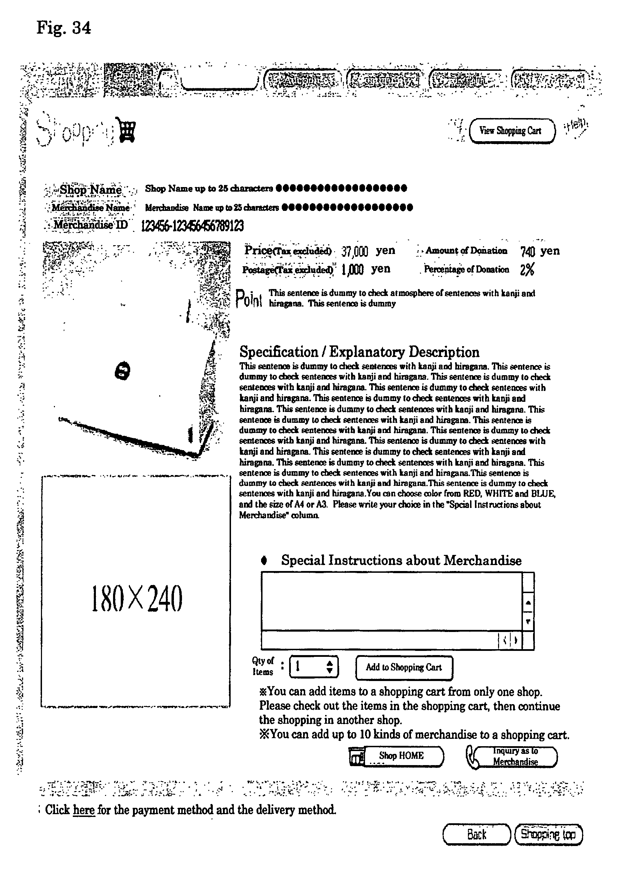

By clicking on the merchandise name on the searched merchandise list screen displayed by the merchandise keyword search and the merchandise category search (Step S105), a merchandise information display screen (shown in Fig. 34) is sent to the buyer terminal 700 from the shop information management unit 143 in the shopping mall server 120 through the WWW server 160 (Step S106).

The merchandise information display screen (shown in Fig. 34) shows the shop name, merchandise name, merchandise ID, price, postage, an amount of a donation, and a percentage of a donation. Then, the picture of the merchandise and an explanation as to the specification/description of the merchandise are displayed.

Also, by clicking on the merchandise name in the shop's merchandise list screen displayed by the shop keyword search and the shop category search (Step S205), the merchandise information display screen (shown in Fig. 34) is sent to the buyer terminal 700 from the shop information management unit 143 in the shopping mall server 120 through the WWW server 160 (Step S106).

The merchandise information display screen (shown in Fig. 34) displays the shop name, merchandise name, merchandise ID, price, postage, an amount of a donation, and a percentage of a donation (Step S106). Then, the picture of the merchandise and the specification/description of the merchandise are displayed.

When the buyer who has read the information on the merchandise information display screen (shown in Fig. 34) clicks on an "Add to Shopping Cart" button in the merchandise information display screen (shown in Fig. 34), an ID and password authentication dialog box is sent to the buyer terminal 700 (Step S110).

The buyer inputs information into the ID and password authentication dialog box opened by pressing the "Add to Shopping Cart" button (Step S111), and presses an "Authenticate" button. The buyer who has not completed the membership registration yet presses a "New Membership Registration" button, and completes the membership registration.

At this point, the shopping mall server 120 checks the input information with the content of the membership database unit 300 by the membership management unit 144, and when the buyer is identified as the member, he or she is allowed to view the content of the shopping cart (Step S112).

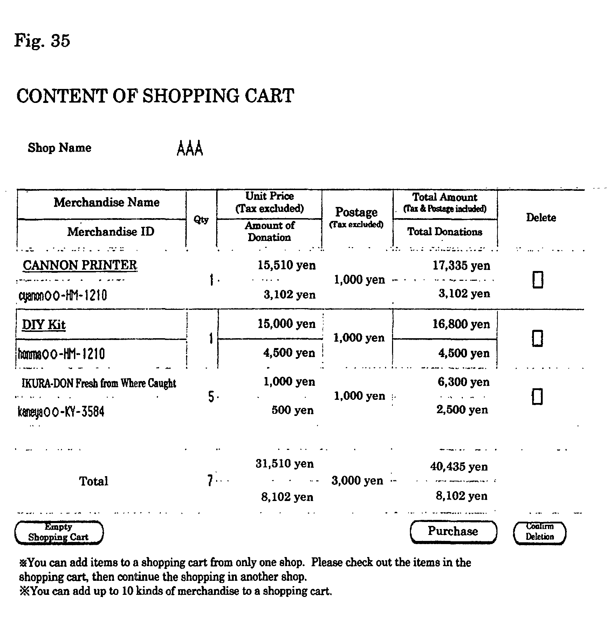

The buyer clicks on a "View Shopping Cart" button in the merchandise information display screen described above (shown in Fig. 34) (Step S113), whereupon, in case that the identity of the buyer has been authenticated, a shopping cart content screen (shown in Fig. 35) is sent to the buyer terminal 700 from the order-by-shopping management unit 146 in the shopping mall server 120 through the WWW server 160 (Step S114).

The shopping cart content screen displays the shop name, merchandise name, merchandise ID, the quantity of items, unit price, an amount of a donation, postage, a total amount, and total donations.

The amount (postage included and tax included) is calculated in accordance with an equation, {(unit price-an amount of a donation) $\times$ the quantity of items + postage} $\times$ 105% + total donations, and then displayed.

In case that the shopping cart content screen (shown in Fig. 35) displays a merchandise item the buyer does not wish to purchase, the buyer checks the check box for deletion, and when the deletion of the checked merchandise item is confirmed, he or she presses a "Confirm Deletion" button (Step S115).

Further, when the shopping cart needs to be emptied, the buyer clicks on an "Empty Shopping Cart" button (Step S116).

After the "Confirm Deletion" button is pressed, the merchandise item checked in the check box is deleted, and the merchandise items other than the deleted merchandise are displayed again.

Also, after the "Empty Shopping Cart" button is pressed, the shopping cart content screen is closed and the screen returns to the merchandise information display screen (shown in Fig. 34) (Step S117).

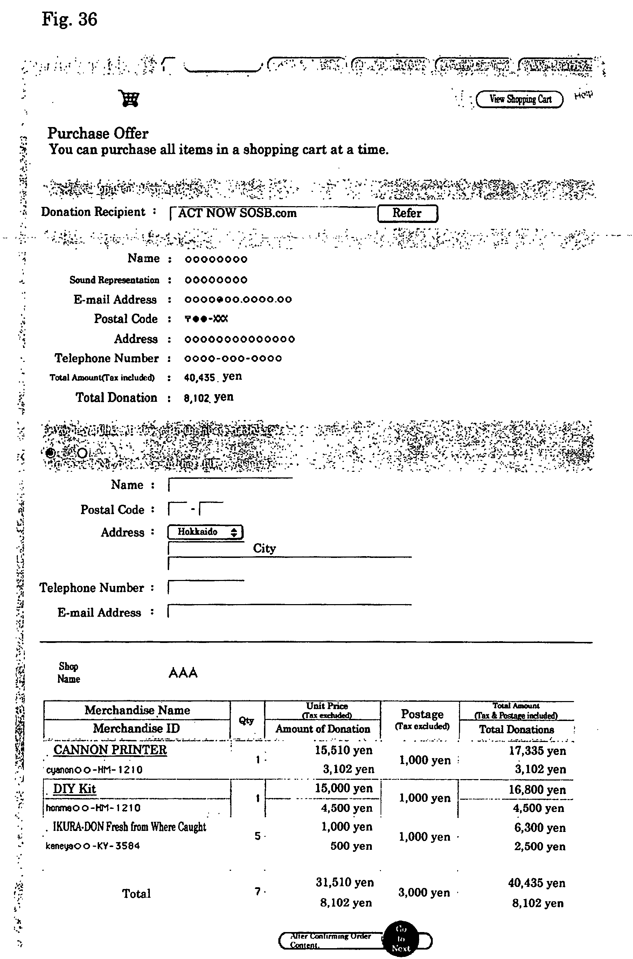

By clicking on a "Purchase" button in the shopping cart content screen (shown in Fig. 35) (Step S118), a purchase offer screen (shown in Fig. 36) is sent to the buyer terminal 700 from the order-by-shopping management unit 146 in the shopping mall server 120 through the WWW server 160 (Step S119).

The purchase offer screen (shown in Fig. 36) displays the order information (name, sound representation, e-mail address, postal code, address, telephone number, a total amount (tax included), and total donations) (Step S120).

In case that the buyer and the addressee are different, it is arranged so that the necessary particulars as to the delivery destination are inputted. In other words, when the buyer wishes the merchandise to be delivered to a destination other than the address inputted at the time of membership registration, he or she inputs the necessary particulars.

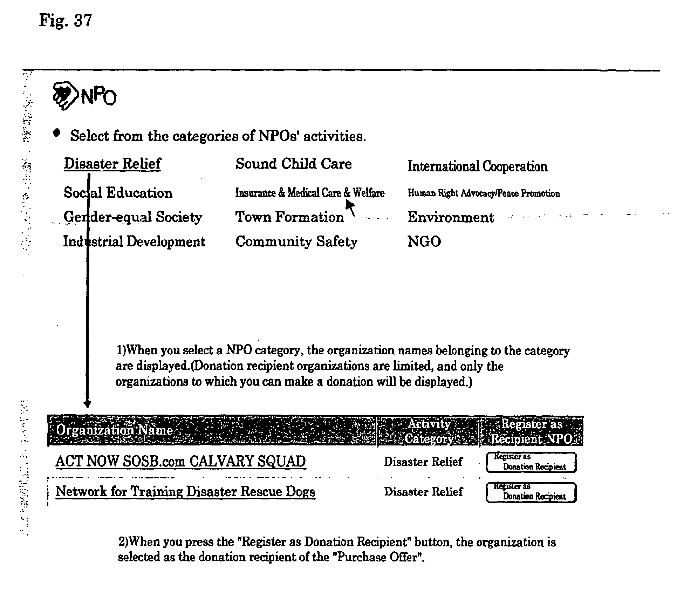

Also, after the buyer specifies the delivery destination, he or she further confirms the merchandise name, merchandise ID, the quantity of items, unit price, an amount of a donation, postage, a total amount, and total donations, and clicks on a "Go to Next, After Confirming Order Content" button (Step S select the NPO from the content of activities, the buyer clicks on a "Refer" button on the purchase offer screen (shown in Fig. 36) sent by the WWW server 160 from the order-by-shopping management unit 146 in the shopping mall server 120, whereupon an NPO selection screen (shown in Fig 37) is sent to the buyer terminal 700 from the shopping mall server 120.

The NPO selection screen (shown in Fig. 37) displays the activity categories of the NPOs. The activity categories include, for example, disaster relief, social education, gender-equal society, industrial development, sound child care, insurance, medial care, and welfare, town formation, community safety, international cooperation, human right advocacy/peace promotion, environments, NGO, etc.

When the buyer selects the activity category, the organization names and the activity category are displayed, and if there is an organization the buyer wishes to select as a donation recipient, he or she presses a "Register as Donation Recipient" button, whereupon the organization is selected as the donation recipient of the purchase offer.

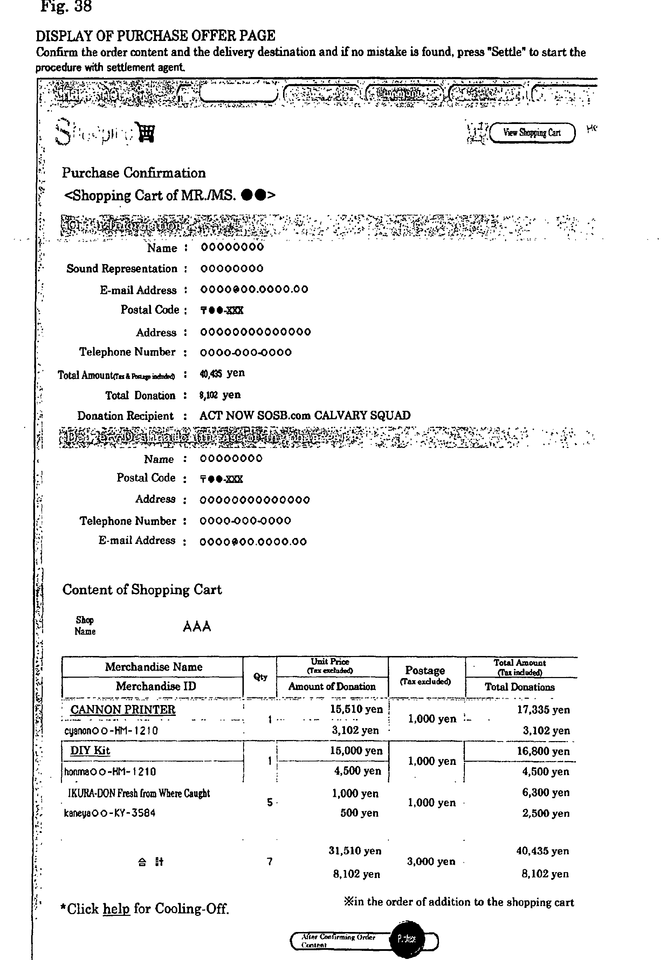

Then, the buyer confirms the content of the order and the delivery destination on a purchase confirmation screen (shown in Fig. 38) sent from the order-by-shopping management unit 146 in the shopping mall server 120 through the WWW server 160, and if there is no mistake, the buyer presses a "Purchase, After Confirming Order Content" button, after which a procedure with the settlement system 800 is carried out (Step S122).

Next, the following description will describe a case where the merchandise is purchased at auction with reference to Fig. 32 showing a flow of an auction.

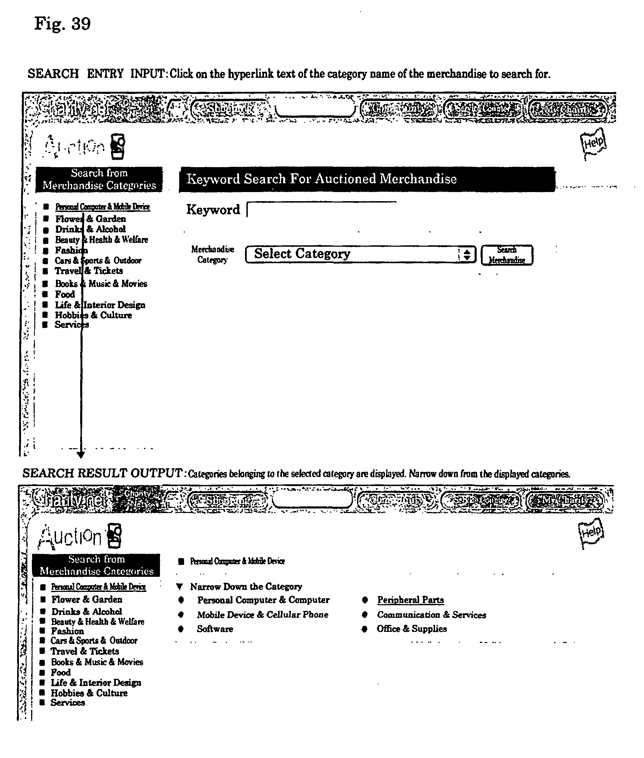

Initially, the buyer clicks on an "Auction" button in the top page (shown in Fig. 33) sent to the buyer terminal 700 from the shop information management unit 143 in the shopping mall server 120 (Step S301), whereupon an auctioned merchandise search screen (shown in Fig. 39) is sent to the buyer terminal 700 from the shop information management unit 143 in the shopping mall server 120 through the WWW server 160 and then displayed (Step S302).

The buyer inputs a search entry in the auctioned merchandise search screen (shown in Fig. 39) sent to the buyer terminal 700 (Step S302). The search method includes a "merchandise category search" and a "keyword search".

In the "keyword search", the buyer inputs a keyword in a search entry input screen (shown in Fig. 39) and specifies the category from the pull-down menu, which allows the AND search by the keyword and the broad category. The entry is decided by clicking on a "Search Merchandise" button (Step S303).

The search result of the search by the shop information management unit 143 in the shopping mall server 120 is sent to the buyer terminal 700 by the WWW server 160 from the shopping mall server 120 (Step S304).

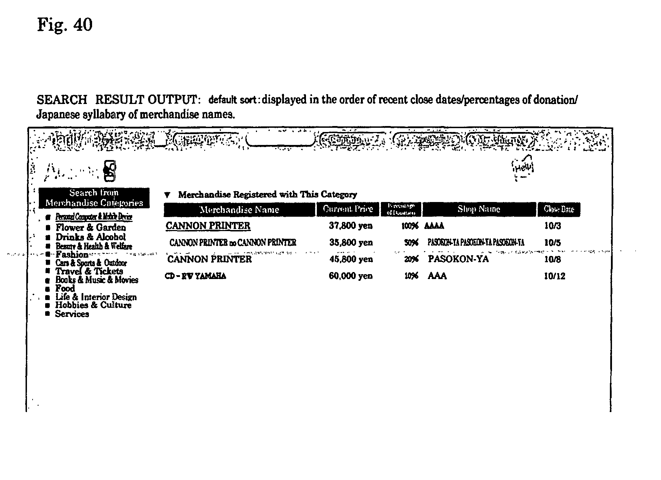

The search result of the search by the shop information management unit 143 in the shopping mall server 120 is displayed on a searched merchandise list screen (shown in Fig. 40) in the order of the recent close dates/ percentages of a donation/Japanese syllable or character of the merchandise names by the default sort (Step S306). To be more specific, the merchandise name, current price, a percentage of a donation, shop name, and close date of the auction are displayed.

Also, in the "merchandise category search", by inputting a merchandise category in the search entry input screen (shown in Fig. 39), the buyer can conduct a narrowing search from the merchandise category. By clicking on the hyperlink text with the category name of the merchandise the buyer wishes to search, the categories belonging to the selected category are displayed, and further, the categories can be narrowed down. The entry is decided by clicking on the "Search Merchandise" button.

The search result of the search by the shop information management unit 143 in the shopping mall server 120 is sent to the buyer terminal 700 by the WWW server 160 from the shopping mall server 120 (Step S305).

The search result is displayed on the searched merchandise list screen (shown in Fig. 40) in the order of the recent close dates/percentages of a donation/ Japanese syllable or character of the merchandise names by the default sort (Step S306). To be more specific, the merchandise name, current price, a percentage of a donation, shop name, and close date of the auction are displayed.

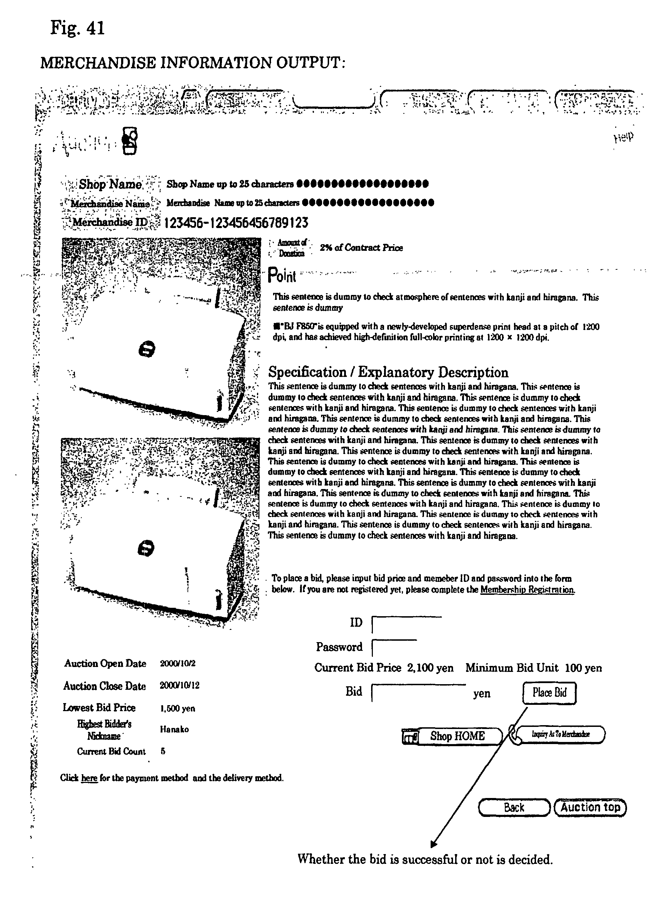

If the buyer wishes to attend at an auction, he or she clicks on the merchandise name (Step S307), and subsequently, a merchandise information display screen (shown in Fig. 41) is sent to the buyer terminal 700 from the shopping mall server 120 and then displayed.

The merchandise information display screen (shown in Fig. 41) displays the shop name, merchandise name, merchandise ID, an amount of a donation, and specification/explanatory description of the merchandise, plus the information related to the auction.

As the information related to the auction, the open date of the auction, close date of the auction, lowest bid price, highest bidder's nickname, current bid count, current bid price, and minimum bid unit are displayed. Then, the buyer willing to attend an auction inputs a bid price into a "Bid Box" for inputting a bid price and clicks on a "Place Bid" button (Step S308).

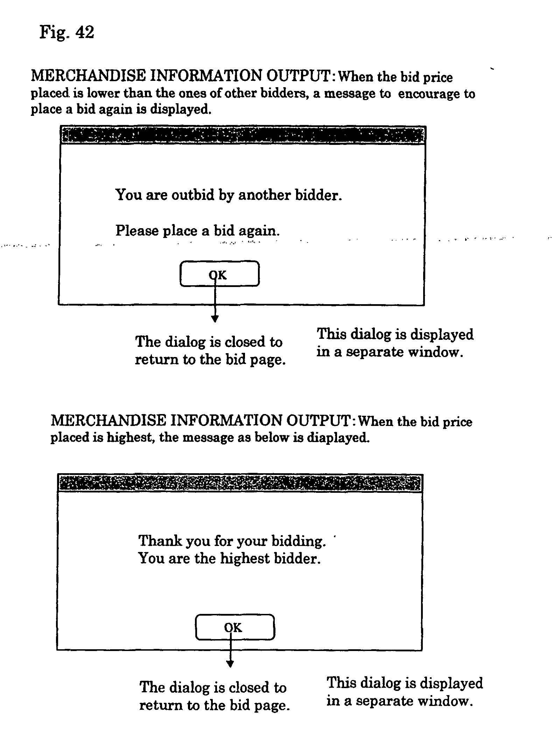

Whether the placed bid is successful or unsuccessful is decided by the order-by-auction management unit 147 in the shopping mall server 120, and as shown in Fig. 42, when the inputted bid price is lower than the bids from the other bidders, a dialog box encouraging the buyer to place a bid again is displayed, whereas when the inputted bid price is higher than the bids from the other bidders, a message notifying that he or she is the highest bidder is displayed, which makes the bid successful (Step S309).

Subsequently, an auction successful bid purchase offer screen, which is similar to the shopping purchase offer screen (shown in Fig. 36), is sent to the buyer terminal 700 from the order-by-auction management unit 147 in the shopping mall server 120 through the WWW server 160 and then displayed.

When the winning bidder at auction wishes to purchase the merchandise, on the displayed screen, he or she selects a donation recipient, confirms the order information (name, sound representation, e-mail address, postal code, address, telephone number, facsimile number, a total amount (tax included and postage included), and total donations), while specifying a desired delivery destination with a radio button. In case that the buyer wishes a delivery to an address other than the address displayed in the order information, he or she inputs a desired delivery destination in the input form.

Further, the buyer confirms the information of the merchandise he or she won and purchased at auction. The merchandise information displayed in the auction successful bid purchase offer screen (similar to the screen shown in Fig. 36) includes the shop name, merchandise name, merchandise ID, an amount, an amount of a donation, postage, a total amount (tax included and postage included), and total donations.

When the buyer selects a donation recipient, if he or she wishes to select an NPO according to the activities, the buyer clicks on a "Refer" button in the auction successful bid purchase offer screen, whereupon an NPO selection screen is sent to the buyer terminal 700 from the shopping mall server 120 and then displayed.

When the buyer selects the activity category among the NPOs' activity categories to which he or she wishes to make a donation, the organization names belonging to that activity category are displayed.

When the buyer presses a "Register as Donation Recipient" button, the organization is selected as the donation recipient on the auction successful bid purchase offer screen.

Then, after these inputs, the winning bidder at auction who wishes to purchase the merchandise confirms the content of the order, and clicks on a "Go to Next, After Confirming Order Content" button.

Subsequently, an auction successful bid purchase confirmation screen, which is similar to the shopping merchandise purchase confirmation screen (shown in Fig. 38), is sent to the buyer terminal 700 from the shopping mall server 120 and then displayed. The winning bidder who wishes to purchase the merchandise confirms the content on the auction successful bid purchase confirmation screen including the merchandise information and the delivery destination, and when he or she wishes to purchase the merchandise, he or she presses a "Purchase" button. After the "Purchase" button is pressed, the screen goes to a screen for the procedure of the settlement system 800.

The buyer of the merchandise by shopping or at auction makes a payment for the purchase amount of the merchandise at an arbitrary payment agent based on the contents of the order of the merchandise and the donation recipient, and in the case of payment in cash, the procedure is as follows.

After the settlement system 800 that confirmed the payment by cash inputs data indicating the completion of the payment by the buyer into the shopping mall server 120, the e-mail sending/receiving unit 180 sends e-mail to the merchandise seller terminal 500 to provide the confirmation of the completion of the payment.

Upon receipt of the e-mail notifying the completion of the payment, the merchandise seller delivers the shopping or selected merchandise to the buyer based on the content of the e-mail notifying the content of the shopping and the successful bid for the purchased merchandise.

Means of paying in cash includes an ATM at a convenience store or cash on delivery, and in the case of the payment in cash by such means, the shopping mall server 120 receives e-mail or the like notifying the confirmation of the completion of the payment directly from a settlement agent company handling the payment in cash or by way of the settlement system 800.

In the case of the payment by credit, the settlement procedure and the order data are sent to the payment handling agent server 810 in the settlement system 800 from the shopping mall server 120.

Upon receipt of the settlement procedure and the order data, the payment handling agent server 810 checks the credit with the financial institution and each credit company.

Upon receipt of the credit result from the financial institution terminal 820, the payment handling agent server 810 returns the credit result to the shopping mall server 120. When the credit is guaranteed, the order is established.

When the order is established, order acceptance confirmation e-mail is sent to the buyer terminal 700 and the merchandise seller terminal 500 from the payment handling agent server 810.

The merchandise seller, that is, the shopping merchandise seller and the auction exhibitor, obtains the detailed information, such as the description of the merchandise with which the order is established and the delivery destination, from the shopping mall server 120, so that he or she makes a reference to the order information and confirms the content of the order.

The merchandise seller and the auction exhibitor deliver the merchandise in accordance with the content of the order.

In the meantime, the merchandise seller terminal 500 sends the shipping check information to the payment handling agent server 810, and the payment handling agent server 810 checks the shipping, whereby the acceptance of the order is established.

Also, the payment handling agent sends a shipping confirmation e-mail to the buyer terminal 700 on the command of the payment handling agent server 810.

As described above, after the purchase amount is paid (in cash or by credit), the financial institution terminal 820 notifies the shopping mall server 120 of a payment of an amount after a deduction of the handling charges of the financial institution, while remitting the payment.

Upon confirmation of the receipt of the remittance of an amount after a deduction of the handling charges, the shopping mall server 120 notifies the payment handling agent server 810 that it will pay the handling charges of the payment handling agent and pays the handling charges.

Due to the accounting system of the shopping system operator, a donation is credited as the deposit. For this reason, as to a donation included in the purchase amount, the shopping mall server 120 recodes an amount of donations scheduled to be given to each NPO as the deposit and stores the same in the deposit database unit 380.

Next, the following description will describe the procedure of the payment to the merchandise seller.

Initially, the shopping mall server 120 extracts the order acceptance data and the cancel and return data from the successful bid database unit 260 and the order database unit 280 by the order-by-shopping management unit 146 and the order-by-auction management unit 147, and further, extracts shop-by-shop payment management data, NPO-by-NPO donation contribution data, and merchandise-by-merchandise cumulative sales data.

Then, the shopping mall server 120 sends the shop-by-shop payment management data, NPO-by-NPO donation contribution data, and merchandise-by-merchandise cumulative sales data to the merchandise seller terminal 500.

Then, upon confirmation of the payment of the purchase amount by the buyer, the details of the payment for sales with respect to each merchandise seller are presented.

On this command, the shopping system operator instructs the financial institution terminal 820 to remit the sales amount.

Next, the following description will describe a management basic flow with respect to the NPO.

The shopping mall server 120 extracts the order acceptance data and the cancel and return data from the successful bid database unit 260 and the order database unit 280 by the order-by-shopping management unit 146 and the order-by-auction management unit 147, and further, extracts NPO-by-NPO payment management data and shop-by-shop donation contribution data.

Then, the shopping mall server 120 extracts cumulative payable amount data to the NPOs, and of all the donations recorded and stored in the deposit database unit 380, as to the payable donations, it sends the NPO-by-NPO payment management data to the NPO terminal 600 and makes a payment of donations. The shopping mall server 120 also sends the shop-by-shop donation contribution data to the NPO terminal 600.

**INDUSTRIAL APPLICABILITY**

As has been discussed above, according to preferred embodiments of the present invention, it is possible to provide a method of purchasing merchandise over a network that allows an individual to purchase particular merchandise promptly, and to make a donation to an arbitrary organization by purchasing particular merchandise.

**Claims**

**1.** A method of selling merchandise over a network including the Internet, comprising:

a step of registering information of merchandise for sale so that a buyer can browse merchandise information including a description and/or a sale price of the merchandise for sale by a WWW browser;
a step of presenting the sale price, and an amount of a donation and/or a percentage of a donation to be given to a donation recipient organization corresponding to the sale price, all being included in said merchandise information;
a step of accepting purchase offer information of said merchandise including information identifying said buyer;
a step of confirming whether a payment is completed by the buyer; and
a step of recording donation information corresponding to a content of the purchase offer information of said buyer.

**2.** The method of selling merchandise over a network according to Claim 1, wherein said step of registering information of merchandise for sale includes a step of deciding, at a seller's end, the amount of a donation and/or the percentage of a donation to be given to an arbitrary organization.

**3.** The method of selling merchandise over a network according to Claim 1 or 2, further comprising a step of delivering said merchandise for sale to the buyer.

**4.** A method of selling merchandise over a network including the Internet, comprising:

a step of registering auctioned merchandise information so that a person who wishes to make a purchase can browse merchandise information including a description of auctioned merchandise by a WWW browser;
a step of presenting at least a description of merchandise and an amount of a donation and/or a percentage of a donation to be given to a donation recipient organization with respect to a contract price, all being included in said auctioned merchandise information;
a step of accepting bid information for the auctioned merchandise including information identifying the person who wishes to make a purchase;
a step of determining a winning bidder of the auctioned merchandise;
a step of confirming whether a payment corresponding to successful bid information is completed by the winning bidder; and

a step of recording donation information corresponding to a content of the bid information of said winning bidder.

5. The method of selling merchandise over a network according to Claim 4, wherein said step of registering auctioned merchandise information includes a step of deciding, at a seller's end, a ratio and/or the amount of a donation to be given to an arbitrary organization with respect to the contract price.

6. The method of selling merchandise over a network according to Claim 4 or 5, further comprising a step of delivering said auctioned merchandise to the winning bidder.

7. The method of selling merchandise over a network according to any of Claims 1 through 6, wherein said step of recording donation information includes a step of creating or updating a donation information database corresponding to the content of the purchase offer information of the buyer.

8. The method of selling merchandise over a network according to any of Claims 1 through 7, wherein said step of recording donation information includes a step of recording the donation information as a deposit.

9. The method of selling merchandise over a network according to any of Claims 1 through 8, further comprising a step of allowing the buyer to browse information related to the donation recipient organization.

10. The method of selling merchandise over a network according to any of Claims 1 through 9, further comprising a step of allowing the buyer to decide the donation recipient organization.

11. A method of purchasing merchandise over a network including the Internet, comprising:

a step of registering information of merchandise for sale so that a buyer can browse merchandise information including a description and a sale price of the merchandise for sale by a WWW browser;
a step of presenting at least a description of the merchandise, the sale price, and an amount of a donation to be given to a donation recipient organization included in the sale price, all being included in said merchandises information;
a step of inputting purchase offer information of said merchandise including information identifying the buyer;
a step of making a payment corresponding to a purchase offer at said buyer's end;
a step of confirming whether said payment is completed;
a step of creating or updating a donation information database corresponding to a content of the purchase offer information of said buyer; and
a step of delivering said merchandise for sale to the buyer.

12. The method of purchasing merchandise over a network according to Claim 11, wherein said step of registering information of merchandise for sale includes a step of deciding, at a seller's end, the amount of a donation to be given to an arbitrary organization.

13. The method of purchasing merchandise over a network according to Claim 1 or 12, wherein said step of deciding, at a seller's end, the amount of a donation to be given to an arbitrary organization is conducted more than once by the seller with an arbitrary amount of a donation.

14. A method of purchasing merchandise over a network including the Internet, comprising:

a step of registering auctioned merchandise information so that a person who wishes to make a purchase can browse merchandise information including a description of auctioned merchandise by a WWW browser;
a step of presenting at least a description of merchandise and a ratio of an amount of a donation to be given to a donation recipient organization with respect to a contract price, all being included in said auctioned merchandise information;
a step of inputting bid information for the auctioned merchandise including information identifying the person who wishes to make a purchase;
a step of determining a winning bidder of the auctioned merchandise;
a step of notifying successful bid information to the winning bidder through the network;
a step of making a payment corresponding to said successful bid information at said winning bidder's end;
a step of confirming whether said payment is completed;
a step of creating or updating a donation information database corresponding to a content of the bid information of said winning bidder; and
a step of delivering said auctioned merchandise to the winning bidder.

15. The method of purchasing merchandise over a network according to Claim 14, wherein said step of registering auctioned merchandise information includes a step of deciding, at a seller's end, a ratio to be donated to an arbitrary organization with respect to the contract price.

16. The method of purchasing merchandise over a network according to Claim 14 or 15, wherein said step of deciding, at a seller's end, a ratio to be donated to an arbitrary organization with respect to the contract price is conducted more than once by said seller with an arbitrary donation ratio.

17. The method of purchasing merchandise over a network according to any of Claims 11 through 16, further comprising a step of allowing the buyer to browse information related to the donation recipient organization.

18. The method of purchasing merchandise over a network according to Claim 17, wherein a ranking based on a size of actual giving of donations is displayed in said step of allowing the buyer to browse information related to the donation recipient organization.

19. The method of purchasing merchandise over a network according to any of Claims 11 through 18, further comprising a step of allowing said buyer to decide the donation recipient organization.

20. The method of purchasing merchandise over a network according to any of Claims 11 through 18, further comprising a step of allowing the buyer to select the donation recipient organization and to decide the amount of a donation.

21. The method of purchasing merchandise over a network according to Claim 20, wherein said step of allowing the buyer to select the donation recipient organization and to decide the amount of a donation is conducted at an arbitrary time by the buyer or the winning bidder.

Fig.1

<u>10</u>

12

14

100
Network

18

16

Fig.2

14

20
WWW Server
Function Unit

22
E-mail Sending/
Receiving Unit

24
Merchandise
Database Unit

26
Successful Bid
Database Unit

28
Order
Database Unit

30
Membership
DatabaseUnit

32
Settlement Information
Database Unit

34
Donation Status
Database Unit

36
Donation Subject
Organization Database
Unit

Fig.3

```
          ┌───────────┐
          │   Start   │
          └───────────┘
                │
                ▼
        ┌─────────────────┐
        │    Register     │ ──── S1
        │   merchandise   │
        └─────────────────┘
                │
                ▼
        ┌─────────────────┐
        │  Input bid data │ ──── S2
        └─────────────────┘
                │
                ▼
      ┌───────────────────────┐
      │ Send e-mail to notify │ ──── S3
      │ content of successful │
      │ bid & Update donation │
      │ status database unit  │
      └───────────────────────┘
                │
                ▼
        ┌─────────────────┐
        │ Make payment of │ ──── S4
        │ contract price  │
        └─────────────────┘
                │
                ▼
        ┌─────────────────┐
        │ Update settlement│ ──── S5
        │   information    │
        │  database unit   │
        └─────────────────┘
                │
                ▼
        ┌─────────────────┐
        │ Send e-mail to notify│ ──── S6
        │ completion of payment│
        └─────────────────┘
                │
                ▼
        ┌─────────────────┐
        │ Deliver selected│ ──── S7
        │   merhcandise   │
        └─────────────────┘
                │
                ▼
          ┌───────────┐
          │    End    │
          └───────────┘
```

Fig.4

```
                    ┌─────────────┐
                    │    Start    │
                    └──────┬──────┘
                           │
                    ┌──────▼──────┐
                    │   Register  │        S21
                    │ merchandise for │
                    │ sale at asking price │
                    └──────┬──────┘
                           │
                    ┌──────▼──────┐
                    │ Input purchase offer │   S22
                    │  data & Update  │
                    │ donation status │
                    │ database unit │
                    └──────┬──────┘
                           │
                    ┌──────▼──────┐         S23
                    │ Make payment │
                    └──────┬──────┘
                           │
                    ┌──────▼──────┐           S24
                    │ Update settlement │
                    │ information database unit │
                    └──────┬──────┘
                           │
                    ┌──────▼──────┐          S25
                    │ Send e-mail to notify │
                    │ completion of payment │
                    └──────┬──────┘
                           │
                    ┌──────▼──────┐          S26
                    │ Deliver merchandise for sale │
                    └──────┬──────┘
                           │
                    ┌──────▼──────┐
                    │     End     │
                    └─────────────┘
```

Fig.5

<u>110</u>                    500(501,502,503,
                              504,505,506)

120
(140)
(160)

600(601,602,603)

820

810

100
Network

700

800

| | | | |
|---|---|---|---|
| 110 | Shopping System | 600 | NPO Terminal |
| 120 | Shopping Mall Server | 700 | Buyer Terminal |
| 140 | Database Server | 800 | Settlement System |
| 160 | WWW Server | 810 | Payment Handling Agent Server |
| 500 | Merchandise Seller Terminal | 820 | Financial Institution Terminal |

## Fig.6

◄·········· Flow of Data

◄──── Flow of Money

◄■ ■ Flow of Merchandise

Deliver merchandise

[SELLER]

[Corporation]
Merchandise Seller Terminal

**500**

Register merchandise

Confirm content of
order(As needed)

Pay cost price

[SHOPPING SYSTEM
OPERARTOR]

**Shopping Mall Server120**

Membership Data
Shop/NPO Data
Merchandise Data
Order Data

Order merchandise &
Specify donation recipient

Confirm content of
order(As needed)

Settlement
procedure &
Send order data

Return
credit status

[BUYER]

[Member]
Buyer Terminal

**700**

Place shipping check
(Settlement confirmed)

Remit donations(deposit)

Payment after
deducting
handling charges

Pay handling
charges

Acceptance
confirmation mail

Merchandise
shipping mail

**NPO Terminal 600**

**Financial Institution
Terminal 820**
Each Credit Company

Credit   Check

**Payment Handling Agent Server
810**

Pay purchase price(Pay by credit)

EP 1 313 047 A1

EP 1 313 047 A1

Fig.7

120

Database Server (140)

WWW Server (160)

E-mail Sending/ Receiving Unit (180)

220 Operation Management Database Unit

300 Membership Database Unit

360 Donation Subject Organization Database Unit

240 Merchandise Database Unit

310 Merchandise Seller Database Unit

380 Deposit Database Unit

260 Successful Bid Database Unit

320 Settlement Information Database Unit

400 Mail Data Database Unit

280 Order Database Unit

340 Donation Status Database Unit

420 Purchase Database Unit

Fig.8

140

141
Operation
Management
Unit

144
Membership
Management
Unit

147
Order-By-Auction
Management Unit

150
Deposit
Management
Unit

142
Mall
Management
Unit

145
NPO
Management
Unit

148
Mail
Management
Unit

151
Purchase
Management
Unit

143
Shop Information
Management
Unit

146
Order-By-Shopping
Management Unit

149
Donation Status
Management
Unit

Fig.9

OPERATION TO REGISTER, AMEND, AND DELETE NARROW CATEGORY

**Category Management**

In category registration, register a new category, then select a category name from the pull-down menu to amend or delete.

Registration of
Narrow Category

| Broad Category | Personal Computer & Mobile Device |

→ To Fig.10

Narrow Category

Percentage of Net
Operating Expenses ☐ %    [ Confirm Current Percentage of Net Operating Expenses ]

[ Register ]

Amendment of
Narrow Category

Narrow Category to Amend [ Select ⬍ ]

→ To Fig.10

Amend Narrow Category

Amend Percentage of Net
Operating Expenses ☐ %    [ Confirm Current Percentage of Net Operating Expenses ]

[ Amend/Confirm ]

Deletion of
Narrow Category

Narrow Category to Delete [ Select ⬍ ]

[ Delete/Confirm ]

•Registration of Narrow Category
    Input a narrow categry name and a percentage of net operating expenses, then press the "Register" button.
•Amendment of Narrow Category
    Select a narrow category to amend from the pull-down menu, input an amended narrow category name and percentage of net operating expenses, then press the "Amend/Confirm" button.
 •Deletion of Narrow Category
    Select a narrow category delete from the pull-down menu, press the "Delete/Confirm" button.
•When you press the "Confirm Current Percentage of Net Operating Expenses" button, you can confirm the current percentage on the same screen you can make a confirmation on at merchandise registration.

31

Fig.10

A new window is opened, and you can confirm a percentage of net operating expenses.

1) Select the broad category to which the narrow category a percentage of net operating expenses is registered for belongs.

| Personal Computer & Mobile Device | Fashion | Jewelry |
|---|---|---|
| Games & Software | Brands | Coins & Stamps |
| Household Appliances | Sports | Musical Instruments |
| AV equipment | Outdoor | Toys |
| Books & Music & Movies | Flower & Garden | Housewares & Convenience Goods |
| Comics | Beauty & Health & Welfare | Drinks & Alcohol |
| Hobbies & Culture | Life & Interior Design | Cars & Motorcycles & Bicycles |
| Travel & Tickets | Arts | Housing & Real Estate |

2) Confirm percentage of net operating expenses.

Merchandise Registration

Please select the category of mechandise to be registered.

Personal Computer
   & Mobile Device

- Personal Computer & Computer     (8%)
- Peripheral Parts     (2%)
- Software     (8%)

- Mobile Device & Cellular Phone   (4%)
- Communication&Service   (4%)
- Office & Supplies     (4%)

percentage of net operating expenses

## Fig. 11

## NARROW-DOWN SEARCH RESULT FOR CHANGE OR DELETION

Shop Information
Management

Shop
List
Default Sort: in the order of Japanese syllabary of shop names

| Shop ID / Shop Name | Shop Category | Name of person in charge / Email Address of person in charge | TEL / FAX | Address |
|---|---|---|---|---|
| pa232 AAAA | Personal Computer & Mobile Device | TANAKA aaa@aa.co.jp | 03-0124-01231 03-0124-01231 | Hokkaido |
| bb1e4 qbbb | Personal Computer & Mobile Device | YAMAMOTO bbb@aa.or.jp | 03-0124-01231 03-0124-01231 | Osaka |
| Asa51 ●● | Personal Computer & Mobile Device | KAWASAKI ccc@aa.or.jp | 03-0124-01231 03-0124-01231 | Tokyo |

※ Shop names is linked to detailed information page

▲Previous/Next▼      Up to 20 matches displayed

Mail to

Ths shop name is linked to detailed shop information.

Shop Information
Management

| | |
|---|---|
| Shop Name | Livuy Shoten |
| Sound Representation | RI-BAI-SHOU-TE-N |
| Shop ID | 400982 |
| Password | store10982 |
| Shop Category | Consumer Shop Category A |
| TEL | 03-1234-5678 |
| FAX | 03-1234-5679 |

| Address | Postal Code | 100-1111 |
|---|---|---|
| | Prefecture | Tokyo |
| | City | Chuo-ku |
| | | 2-2-2, Uchisaiwai-cho |

| | |
|---|---|
| Name of Representative | HOSHINA |
| Department in charge | Livuy Office |
| Name of Person in charge | AOSHIKA |
| Email Address of Person in charge | casika@nttcom ne.jp |
| URL | http://ntt-com.ne jp |
| Search Keyword | Livuy, Telephone, NTT, Personal Computer |
| Profile 1 | We handle Internet electronic settlement system. |
| Profile 2 | We handle Internet electronic settlement system. |
| Contact Email Address | hosina@ntt-com ne jp |
| Open/Closed Setting | Open |

Delete

Confirm Order
Information for Livuy

Search Period    [2001 ▼] - [4 ▼] - [9 ▼] From     Refer
                 [2001 ▼] - [4 ▼] - [9 ▼] To

The screen returns to the list. ◄─────── Back

Fig. 12

## CHANGE OF MEMBERSHIP INFORMATION

Membership Information Management

| | |
|---|---|
| Name | Hanako YAMADA |
| Sound Representation | HA-NA-KO  YA-MA-DA |
| Nickname | Hanako |
| Member ID | 00011 |
| Password | as2222z |
| Gender | Female |
| Birth Date | 1977.12.08 |
| T E L | 03-0124-01231 |
| F A X | 03-0124-01231 |
| Postal Code | 000-0000 |
| Address | X-X, YYY-cho, Sapporo-City, Hokkaido |
| Email Address | aaa@aa.co.jp |
| URL | http://aaa.hjhi.co.jp/sdasd/asd/index/ |
| Occupation | Company Employee |
| Married/Single | Single |
| Number of Children | 2 |
| Annual Income | One to Two Million Yen |
| Categories of Interest | Fashion/Brands/Life & Interior Design |
| Approval/Disapproval of DM Delivery | Approved |

[ Delete ]

[ Back ]

•When you press the "Delete" button, a deletion confirm dialog is displayed.
•When you press the "Back" button, the screen returns to the search result screen.

## Fig. 13

### NEW REGISTRATION AND CHANGE OR DELETION OF REGISTERED NPO INFORMATION

Information Management

| Organization Name | AAAA | | |
|---|---|---|---|
| Sound Representation | EI-EI-EI-EI | | |
| NPO I D | pa232 | | |
| Password | asisakei | | |
| NPO Category | Health & Medical Care & Welfare | | |
| TEL | 03-0123-1235 | | |
| FAX | 03-0123-1235 | | |
| Address | Prefecture | Tokyo | |
| | City | Chiyoda-ku | |
| | | 2-13-3, Fujimi | |
| Name of Representative | Taro YAMADA | | |
| Department in charge | | | |
| Name of Person in charge | Hanako TANAKA | | |
| Email Address of Person in charge | aaa@aa.co.jp | | |
| URL | http://aaa.hjhi.co.jp/sdasd/asd/index/ | | |
| NPO Profile | | | |
| Thanks Message | | | |
| Contact Email Address | aaa@aa.co.jp | | |
| Donations | ○ Yes, you can donate. ● No, you cannot donate. | | |

The donation acceptance flag is decided with the radio button.

acceptance of change ← Change

acceptance of deletion ← Delete

Back

35

Fig. 14

## RESULT OF NARROW-DOWN SEARCH

**NPO Payment Management**

NPO List

default sort: in the order of Japanese syllabary of NPO names

| NPO ID | NPO Name | Donation of This Month | Cumulative Payable Amount | Payment | |
|---|---|---|---|---|---|
| acss | ACT NOW | 5,000 | 20,000 | | Execute |
| acsd | ACT NOW SOS | 10,500 | 30,500 | | Execute |
| actns | ACT NOW SOSB.COM CALVARY SQUAD | 0 | 500 | | Execute |
| acgxd | ACT NOW GENDER-EQUAL SOCIETY | 40,000 | 40,500 | | Execute |
| acsase | ACT NOW CHILDREN CALVARY SQUAD | 0 | 500 | | Execute |
| acdswe | ACT NOW CHU-BU | 0 | 500 | | Execute |
| | | | | | |

▲Previous/Next▼          Up to 20 matches displayed

36

Fig. 15

# DISPLAY OF DETAILED INFORMATION OF ORDERED MERCHANDISE

**Order Management**

| Order Information | | Orderer | |
|---|---|---|---|
| Order No. | AA-12345 | Member ID | akira2000 |
| Date of Order | 2000.08.10 | Orderer's Name | Akira TANAKA |
| Shop ID | adsas | Sound Representation of Name | A-KI-RA-TA-NA-KA |
| Shop Name | aaa | Postal Code | 555-5555 |
| Exhibition Group | Shopping | Address | ***, Tennouji-ku, Osaka |
| Recipient NPO | ACT NOW OSB.COM CALVARY SQUAD | | 2-3-6 |

| Delivery Destination | | | |
|---|---|---|---|
| Name | Keiko TANAKA | Email Address | tanaka@tana.co.jp |
| Sound Representation | KE-I-KO-TA-NA-KA | TEL | 06-6000-0000 |
| Address | ***, Tennouji-ku, Osaka | FAX | 06-6000-0000 |
| TEL | 06-6000-0000 | Order Status | Accepted |
| Email Address | keiko@tana.co.jp | ○ Cancel　○ Return　[Update] |

After "Cancel" or "Return" process is executed, you can't undo it.

Ordered Merchandise

| Merchandise ID<br>Merchandise Name | Qty of tiem | Unit Price (Tax excluded)<br>Amount of Donation | Postage (Tax excluded) | Amount (Tax & Postage included)<br>Total Donations |
|---|---|---|---|---|
| canonOO-HM-1210 | 1 | 15,510 yen | 1,000 yen | 17,335 yen |
| CANNON PRINTER | | 3,102yen | | 3,102 yen |
| Special Instructions about Merchandise | | I choose blue box and option A. | | |
| honmaOO-HM-1210 | 1 | 15,000 yen | 1,000 yen | 16,800 yen |
| DIY Kit | | 4,500 yen | | 4,500 yen |
| Special Instructions about Merchandise | | I choose blue box and option A. | | |
| kanryuOO-KY-3584 | 5 | 1,000 yen | 1,000 yen | 6,300 yen |
| IKURA-DON Fresh from Where Caught | | 500 yen | | 2,500 yen |
| Special Instructions about Merchandise | | | | |
| Total | 7 | 31,510 yen | 3,000 yen | 40,435 yen |
| | | 8,102 yen | | 8,102 yen |

[Back]

# EP 1 313 047 A1

## Fig. 16

**Order Management**

**Order Information**

| | |
|---|---|
| Order No. | AA-12345 |
| Date of Order | 2000.08.10 |
| Shop ID | ad383 |
| Shop Name | aaa |
| Exhibition Group | Auction |
| Recipient NPO | ACT NOW OSB.COM CALVARY SQUAD |

**Orderer**

| | |
|---|---|
| Member ID | akira2000 |
| Orderer's Name | Akira TANAKA |
| Sound Representation of Name | A-KI-RA-TA-NA-KA |
| Postal Code | 555-5555 |
| Address | ***, Tennouji-ku, Osaka 2-3-6 |

**Delivery Destination**

| | |
|---|---|
| Name | Keiko TANAKA |
| Sound Representation | KE-I-KO-TA-NA-KA |
| Address | ***, Tennouji-ku, Osaka |
| TEL | 06-6000-0000 |
| Email Address | keiko@tana.co.jp |

| | |
|---|---|
| Email Address | tanaka@tana.co.jp |
| TEL | 06-6000-0000 |
| FAX | 06-6000-0000 |

| Order Status | Accepted |
|---|---|

◯ Cancel    ◯ Return    [ Update ]

After "Cancel" or "Return" process is executed, you can't undo it.

**Ordered Merchandise**

| Merchandise ID | Amount (Tax excluded) | Postage (Tax excluded) | Total Amount (Tax & Postage included) |
|---|---|---|---|
| Merchandise Name | Amount of Donation | | Total Donations |
| cannonOO-HM-1210 | 15,510 yen | 1,000 yen | 17,335 yen |
| CANNON PRINTER | 3,102yen | | 3,102 yen |

[ Back ]

38

**Fig. 17**

## DECISION ON DESTINATION AND CONTENT OF EMAIL

Member-Addressed-Mail
Management

| Create | Change/Delete |

Search of Sending
Subjects

| Gender | Select All ⬍ | | |
|---|---|---|---|
| Birth Date | AD [ ] Y [ ⬍ ] M [ ⬍ ] D From<br>AD [ ] Y [ ⬍ ] M [ ⬍ ] D To | | |
| Address | Postal Code [ - ] | | |
| | Prefecture | Select ⬍ | |
| Occupation | Select All ⬍ | | |
| Married/Single | Select All ⬍ | | |
| Number of Children | Select All ⬍ | | |
| Annual Income | Select All ⬍ | | |
| Total Points | pt~ [ ] pt | | |
| Categories of Interest | ☐ Personal Computer & Mobile Device<br>☐ Games & Software<br>☐ Household Appliances<br>☐ AV equipment<br>☐ Books & Music & Movies<br>☐ Comics<br>☐ Hobbies & Culture<br>☐ Travel & Tickets | ☑ Fashion<br>☑ Brands<br>☐ Sports<br>☐ Outdoor<br>☐ Flower & Garden<br>☐ Beauty & Health & Welfare<br>☑ Life & Interior Design<br>☐ Arts | ☐ Jewelry<br>☐ Coins & Stamps<br>☐ Musical Instruments<br>☐ Toys<br>☐ Housewares & Convenience Goods<br>☐ Drinks & Alcohol<br>☐ Cars & Motorcycles & Bicycles<br>☐ Housing & Real Estate |
| Approval/Disapproval of DM Delivery | Select All ⬍ | | |

| Search |

·When you press the "Create" button, the screen switches to a mail content registration screen.
·When you press the "Change/Delete" button, the screen switches to a mail content change screen.
·Members to which the email is sent are narrowed down.
·Member Search:Select "Select All" for gender, birth date, address, occupation, married/single, number of children, annual income and approval/disapproval of DM Delivery if they are not specified.
·Input each entry and press the "Search" button, then a list of members matching the criteria specified is displayed(AND Search).

Fig. 18

EP 1 313 047 A1

| Shopping System Operator | Shopping Mall Server | Merchandise Seller | Remarks |
|---|---|---|---|
| Send shop-opening application form ←E-mail | | Inquire about shop-opening | Inquiry is accepted via e-mail, etc. |
| Receive shop-opening application ←E-mail | E-mail | Fill out and send shop-opening application form | Application can be made via mail, too. |
| Examine ┈┈NG┈┈ | | Shop-opening application rejected | |
| ↓OK Send shop-opening contract ←E-mail | | Conclude contract | |
| File additional shop with payment handling agent | | | |
| Obtain shop ID for payment handling agent & ID and password for management → | Register shop ID and password for shopping system operator | | Shop ID for shopping system operator and shop ID for payment handling agent are identical. |
| Notify shop ID and password for shopping system operator ──E-mail──→ | | Receive shop ID and password for shopping system operator | |
| Notify shop ID for payment handling agent & ID and password for management ──E-mail──→ | | Receive shop ID and password for payment handling agent & ID and password for management | |
| | Register shop information ← | | |
| | Change password and shop information as needed ← | Login | |

Fig. 19

**Shop Information Management**

| | |
|---|---|
| Shop Name | AAAA |
| Sound Representation | EI-EI-EI-EI |
| Shop ID | pa232 |
| Password | asisakei |
| Shop Category | Personal Computer & Mobile Device ⬍ |
| TEL | 03-0124-01231   Input Example  03-0124-01231 |
| FAX | 03-0124-01231   Input Example  03-0124-01231 |
| Address | Postal Code  -<br><br>Prefecture  Iwate ⬍<br><br>City<br><br>(Input Example 1)<br>Prefecture  Osaka<br>City  Osaka-shi / Ueshio, Tennouji-ku<br>(Input Example 2)<br>Prefecture  Tokyo<br>City  Chiyoda-ku / 2-13-3, Fujimi |
| Name of Representative | Taro YAMADA |
| Name of Department in Charge | * * Department |
| Name of Person in Charge | Hanako YAMADA |
| Email Address of Person in Charge | aaa@aa.co.jp |
| URL | http://aaa.hjhi.co.jp/sdasd/asd/index/ |
| Search Keyword | Input keywords within 50 characters.<br>Put spaces between words. |
| Profile | Input within 40 characters. |
| Contact Email Address | aaa@aa.co.jp |
| Set the Open/Closed Setting to "Open" to disclose the shop and merchandise to general users. | |
| Open/Closed Setting | Open ◯   Closed ◉ |

Change

WEB disclosure/non-disclosure flag for shop/merchandise

change confirmation button

Fig. 20

Merchandise Information
Management

[ Register Shopping Merchandise ]    [ Register Auctioned Merchandise ]

Change/Delete

Merchandise Code [                    ]    Merchandise ID = Shop ID + Merchandise Code

Broad Category [    Select All    ▲▼]

Exhibition Group [    Select All    ▲▼]

Merchandise Name [

Only one search entry is valid.

[    Search    ]

Merchandise Search (Search through registered merchandise items of a logged-in shop)

Merchandise Code = Exact Match Search

Broad Category = Pull-down Select Search

Exhibition Group = Pull-down Select Search    Shopping (S)    Auction (A)

Merchandise Name = Partial Match Search

Only one search entry is valid.

* When multiple entries are input, priority is always given to the upper entry in the search entries.

EP 1 313 047 A1

Fig.21

# REGISTRATION OF NEW SHOPPING MERCHANDISE

**Merchandise Registration**

| Flow of Exhibition Procedure : |
| Select Merchandise Category · |
| ↓ |
| Register Merchandise Information |
| ↓ |
| Confirm Registration |

Please select the broad category of merchandise to be registered.

| Personal Computer & Mobile Device | Fashion | Jewelry |
|---|---|---|
| Games & Software | Brands | Coins & Stamps |
| Household Appliances | Sports | Musical Instruments |
| AV equipment | Outdoor | Toys |
| Books & Music & Movies | Flower & Garden | Housewares & Convenience Goods : |
| Comics | Beauty & Health & Welfare | Drinks & Alcohol |
| Hobbies & Culture | Life & Interior Design | Cars & Motorcycles & Bicycles |
| Travel & Tickets | Arts | Housing & Real Estate |

percentage of net operating expenses

**Merchandise Registration**

Please select the category of merchandise to be registered.

Personal Computer
& Mobile Device

| · Personal Computer & Computer (8%) | · Mobile Device & Cellular Phone (4%) |
| · Peripheral Parts (2%) | · Communication&Service (4%) |
| · Software (8%) | · Office & Supplies (4%) |

·Select the broad category, then the narrow category of merchandise, and go to the merchandise registration screen.

·Be sure to register the narrow category too. In case no appropriate narrow category is found, select "Other"("Other" is not found in the broad categories).

43

Fig. 22

**Merchandise Information Management**

percentage of net operating expenses

Shopping Merchandise
Information Registration

Merchandise Code | Merchandise ID = Shop ID + Merchandise Code

Merchandise Name

Sound Representation

Merchandise Category | Personal Computer & Mobile Device/Peripheral Parts ( 2 % )

Search Keyword | Please input keywords with up to 50 characters.
Please put spaces between words.

Please input within 250 characters.

Explanation of Merchandise

Please input within 250 characters.

Specification/
Explanatory Description

Price(Tax excluded) | yen

Postage(Tax excluded) | yen

Percentage of Donation | %

Registration

Fig. 23

**Merchandise Information Management**

Auctioned Merchandise
Information Registration

a percentage of net operating expenses

Merchandise Code      Merchandise ID = Shop ID + Merchandise Code

Merchandise Name

Merchandise Category    Personal Computer & Mobile Device/Peripheral Parts  ( 2% )

Search Keyword
: Please input keywords within 50 characters.
Please put spaces between words.

Explanation
of Merchandise
: Please input within 250 characters.

Specification/
Explanatory Description
: Please input within 250 characters.

Opening Bid    yen

Bid Rate    yen

Postage(Tax excluded)    yen

Auction Period
Open    /    month    day
Close    /    month    day

Percentage of Donation    %

Registration

Fig. 24

**Merchandise Information Management**

Shopping Merchandise
Information

<Thumbnail Image>

| | |
|---|---|
| Merhcandise Code | pa232cononfb-05 |

Merchandise ID = Shop ID + Merchandise Code

Merchandise Name | CANNON PRINTER OOO

Sound Representation | KYA-NO-N-PU-RI-N-TA OOO

Merchandise Category | Personal Computer & Mobile Device / Peripheral Parts ( 296 )

Search Keyword | Please input keywords within 50 characters.
Please put spaces between words.

Please input within 250 characters.

Explanation of Merchandise

List price is 59,800 yen, but we offer at 37,000 yen.
(consumption tax excluded & postage included) !!!

Please input within 250 characters.

Specification/Explanatory Description

■Cannon renewed the product line of color ink jet printers, and will launch 6 new models including "BJ F850" that pursued an ultimate picture image quality on and after October 9.
■"BJ F850"is equipped with a newly-developed superdense print head at a pitch of 1200 dpi, and has achieved high-definition full-color printing at 1200 × 1200 dpi.

Price | 37000 | yen

Postage | 1000 | yen

Percentage of Donation | 2 %

·When you press the "Delete" button, the above merchandise information is deleted after dialog confirmation.

| Delete | Change |

46

Fig. 25

**Merchandise Information Management**

The screen
returns to the
previous screen.

Registration Accepted.

| Back | Confirmation Screen |

The merchandise information screen viewed from
consumer members is displayed in a separate window.

Charity Net · Charity Net

Auction

Help

Shop Name      AAA      Merchandise Name CANNON PRINTER   Merchandise ID AAS-8J-F850
Percentage of Donation   2% of Contract Price

Point

This sentence is dummy to check atmosphere of sentences with kanji and hiragana.
This sentence is dummy
■"BJ F850" is equipped with a newly-developed superdense print head at a pitch of
1200 dpi, and has achieved high-definition full-color printing at 1200 × 1200 dpi.

**Specification / Explanatory Description**

This sentence is dummy to check sentences with kanji and hiragana. This sentence is
dummy to check sentences with kanji and hiragana. This sentence is dummy to check
sentences with kanji and hiragana. This sentence is dummy to check sentences with
kanji and hiragana. This sentence is dummy to check sentences with kanji and
hiragana. This sentence is dummy to check sentences with kanji and hiragana. This
sentence is dummy to check sentences with kanji and hiragana. This sentence is
dummy to check sentences with kanji and hiragana. This sentence is dummy to check
sentences with kanji and hiragana. This sentence is dummy to check sentences with
kanji and hiragana. This sentence is dummy to check sentences with kanji and
hiragana. This sentence is dummy to check sentences with kanji and hiragana.

To place a bid, please input bid price and memeber ID and password into the form
below. If you are not registered yet, please complete the Membership Registration.

ID ⌐
Password ⌐
Current Bid Price 2,100 yen   Minimum Bid Unit 100 yen
Bid ⌐         yen         Place Bid

Shop HOME      Inquiry As To Merchandise

Auction Open Date   2000/10/2
Auction Close Date   2000/10/12
Lowest Bid Price   1,500 yen
Highest Bidder's Nickname   Hanako
Current Bid Count   5
Click here for the payment method and the delivery method.

Back      Auction top

Fig. 26

## DISPLAY OF SEARCH RESULT

**Order Management**

Order Information
Management

default sort: in the order of dates of order(Descending)

| Order No. | Exhibition | Shop ID | Buyer ID | Total Amount |
| Date of Order | Group | Shop Name | Buyer's Name | (Tax & Postage included) |
| AA-12345 | S | aa-4535 | tanaka | |
| 2000.08.10 | | AAAA | Akira TANAKA | 59,850 |
| AA-12346 | S | aae-0001 | fufu | |
| 2000.08.15 | | AAAA | Takashi FUKAYA | 29,850 |
| AA-12347 | A | cce-0250 | yosano | |
| 2000.08.18 | | AAAA | Kaoru YOSANO | 9,850 |

To confirm details, please click Order No.

▲Previous/Next▼

Up to 20 matches displayed

mail to

· When you press the Order No., the screen switches to the detailed order information(Shopping).

· When you press the Order No., the screen switches to the detailed order information(Auction).

Fig. 27

## AUCTION SUCCESSFUL BID LIST

**Auction Successful Bid Management**

Mail to

Successful Bid
Information
Management

| Shop Name | Merchandise ID | Bid | Bid Rate | Winning Bidder ID |
| Close Date | Merchandise Name | Count | Opening Bid | Contract Price |
| AAA | AAasda12345 | 7 | 100 | ghfhjdgv |
| 2000.08.10 | Printer | | 200 | 3,000 |
| AAA | AA45 | 0 | 100 | ghfhjdgv |
| 2000.08.10 | Personal Computer | | 200 | 3,000 |
| AAA | AA45 | 7 | 100 | ghfhjdgv |
| 2000.08.10 | Copying Machine | | 200 | 3,000 |

Up to 20 matches displayed

▲Previous/Next▼

default sort: in the order of recent close dates and times

| Shopping System Manager | Shopping Mall Server | NPO Manager | Remarks |
|---|---|---|---|
| Send registration application form | E-mail | Inquiry as to registration, Recommendation | Inquiry is accepted via e-mail, etc. |
| E-mail | | | |
| Receive registration application | E-mail | Apply for registration(Also fill in necessary information for registration) | Application can be made via mail, too. |
| Examine(Permission/Rejection of sign-up & Acceptance/Non-acceptance of donations) | NG | Application declined | |
| OK | | | |
| Send contract document | E-mail | Conclude contract | |
| | Register NPO ID and password | | |
| Notify NPO ID and password | E-mail | Receive NPO ID and password | |
| | Register NPO information | | |
| | Register original sentence for thanks mail | Login | |
| Confirm content of registration | | | |
| | Register acceptance/non-acceptance of donations | | |
| | Change password, NPO information, and original sentence for thanks mail as needed | | |

Fig. 28

EP 1 313 047 A1

Fig. 29

**Information Management**

| Organization Name | |
|---|---|
| Sound Representation | |
| NPO I D | pa232 |
| Password | |
| NPO Category | Select ⬍ |
| T E L | (Input Example )03-0124-01231 |
| F A X | (Input Example )03-0124-01231 |
| Address | Postal Code ― |
| | Prefecture Select ⬍ |
| | City |
| | |
| | (Input Example 1) |
| | Prefecture Osaka |
| | City Osaka-shi |
| | Ueshio,Tennouji-ku |
| | (Input Example 2) |
| | Prefecture Tokyo |
| | City Chiyoda-ku |
| | 2-13-3, Fujimi |
| Name of Representative | |
| Name of Department in charge | |
| Name of Person in charge | |
| E-mail Address of Person in charge | |
| URL | |
| NPO Profile | Please input within 200 characters. |
| Thanks Message | Please input within 200 characters. |
| Contact email address | |
| Donation | We do not accept donations. |

[ Register ]

Fig.30

When you click on this logo, the screen returns to this screen.

Fig.30 — Flowchart

- S101 — Charity Net TOP | Shopping | Find Out What You Are Looking For
- S102 — Shopping Search Window | Broad Category | Broad Category
- S103 — Serach merchandise
- S104 — Serached Merchandise List | Merchandise Name
- S105 — Display Merchandise Information | Back | Shop HOME | Add to shopping cart | Merchandise Thumbnail
- S106 — Shopping top
- S110 — Add to shopping cart
- S111 — *Separate Window | Input ID & Password | Authentication | To membership registration
- Membership Registration TOP
- S112 — Empty shopping cart
- S113 — View shopping cart
- S114 — Shopping Cart | Merchandise Name
- S115 — Confirm deletion
- S116 / S117 — Narrow Category List | Narrow Category
- S118 — Purchase
- S119 — Purchase Offer | Merchandise Name
- S120 — Go to next, after confirming order content
- S121 — Confirm Purchase | Merchandise Name
- S122 — Purchase, after confirming order content
- S204 — Shop's Merchandise List | Back
- To Payment Procedure

51

Fig.31

EP 1 313 047 A1

Fig.32

EP 1 313 047 A1

S301

S302

Charity Net TOP

Auction

Find Out What You Are Looking For

Broad Category

Auction Search Window

Broad Category Name

Narrow Category List

Search merchandise ~S303

Narrow Category Name

~S304

~S305

Tomembership registration

Sign-up For Membership Before Proceeding

Searched Merchandise List

~S306

Auction TOP

Merchandise Name

~S307

Back

S308

Membership Registration TOP

Membership Registration

Display Merchandise Information

Place a bid

*You are a highest bidder

*Message Box(Alert)

"Bidding Completes" Message

S309

Shop HOME

Back

Shop's Merchandise List

*You are not a highest bidder

*Message Box(Alert)

"Place a bid again" Message

Fig. 33

**CHARITY NET**

CHARITY NET donates a part of your purchase price to NPOs registered with this site.

First-time User
Information from Shops
About us!
What's CHARITY NET?
User's Guide
FAQ

To Membership Registration

Sign-up for Membership Before Proceeding!

### 🛒 SHOPPING
■ Find Out What You Are Looking For

### 🔨 AUCTION
■ Find Out What You Are Looking For

### 🌐 COMMUNITY
NPO
■ BBS
■ Charity Event List
■ Charity Organization List

Games
■ Crossword Puzzle

COMENT
Try Kanji Crossword Puzzle!

Presents

COMENT
Why don't you collect charity points and get a nice present!

### ☆ What's New!

TOPICS

·Shopping mall will be open!
CHARITY NET is an innovative shopping mall where you can support people participating in the philanthropic activities by merely doing the shopping.

·CHARITY NET will be on exhibition in Internet Fair 2001 Japan scheduled to open on December 30, 2000.

★ · · Shop Information · · ★
·Open This Month
·Donation Bargain

★ · · Event Information · · ★
·Charity Recital of RAKUGO Story(11/02)
·Charity Concert(10/15)
·24-hour TV

KBkids.com

Demandline — Earn Triple ClickMiles for:

Fig. 34

Shop

View Shopping Cart

**Shop Name** Shop Name up to 25 characters ●●●●●●●●●●●●●●●●●●●●
**Merchandise Name** Merchandise Name up to 25 characters ●●●●●●●●●●●●●●●●●●●●
**Merchandise ID** 123456-123456456789123

Price(Tax excluded) 37,000 yen　　Amount of Donation 740 yen
Postage(Tax excluded) 1,000 yen　　Percentage of Donation 2%

Point This sentence is dummy to check atmosphere of sentences with kanji and hiragana. This sentence is dummy

### Specification / Explanatory Description

This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana.This sentence is dummy to check sentences with kanji and hiragana.This sentence is dummy to check sentences with kanji and hiragana.You can choose color from RED, WHITE and BLUE, and the size of A4 or A3. Please write your choice in the "Spcial Instructions about Merchandise" column.

180×240

◆ **Special Instructions about Merchandise**

Qty of Items : 1　Add to Shopping Cart

※You can add items to a shopping cart from only one shop. Please check out the items in the shopping cart, then continue the shopping in another shop.
※You can add up to 10 kinds of merchandise to a shopping cart.

Shop HOME　Inquiry as to Merchandise

: Click here for the payment method and the delivery method.

Back　Shopping top

Fig. 35

# CONTENT OF SHOPPING CART

Shop Name        ÅÅÅ

| Merchandise Name<br>Merchandise ID | Qty | Unit Price (Tax excluded)<br>Amount of Donation | Postage (Tax excluded) | Total Amount (Tax & Postage included)<br>Total Donations | Delete |
|---|---|---|---|---|---|
| CANNON PRINTER<br>cyanonOO-HM-1210 | 1 | 15,510 yen<br>3,102 yen | 1,000 yen | 17,335 yen<br>3,102 yen | ☐ |
| DIY Kit<br>hommaOO-HM-1210 | 1 | 15,000 yen<br>4,500 yen | 1,000 yen | 16,800 yen<br>4,500 yen | ☐ |
| IKURA-DON Fresh from Where Caught<br>kaneyaOO-KY-3584 | 5 | 1,000 yen<br>500 yen | 1,000 yen | 6,300 yen<br>2,500 yen | ☐ |
| Total | 7 | 31,510 yen<br>8,102 yen | 3,000 yen | 40,435 yen<br>8,102 yen | |

( Empty Shopping Cart )        ( Purchase )   ( Confirm Deletion )

※You can add items to a shopping cart from only one shop. Please check out the items in the shopping cart, then continue the shopping in another shop.
※You can add up to 10 kinds of merchandise to a shopping cart.

## Fig. 36

View Shopping Cart    Help

### Purchase Offer
You can purchase all items in a shopping cart at a time.

Donation Recipient : ACT NOW SOSB.com      Refer

| | |
|---|---|
| Name : | oooooooo |
| Sound Representation : | oooooooo |
| E-mail Address : | oooo●oo.oooo.oo |
| Postal Code : | 〒●●-XXX |
| Address : | oooooooooooooo |
| Telephone Number : | oooo-ooo-oooo |
| Total Amount(Tax included) : | 40,435 yen |
| Total Donation : | 8,102 yen |

Name : 

Postal Code :     -

Address : Hokkaido ◆
City

Telephone Number : 

E-mail Address : 

Shop Name       AAA

| Merchandise Name | Qty | Unit Price (Tax excluded) | Postage (Tax excluded) | Total Amount (Tax & Postage included) |
|---|---|---|---|---|
| Merchandise ID | | Amount of Donation | | Total Donations |
| CANNON PRINTER | 1 | 15,510 yen | 1,000 yen | 17,335 yen |
| cyanonOO-HM-1210 | | 3,102 yen | | 3,102 yen |
| DIY Kit | 1 | 15,000 yen | 1,000 yen | 16,800 yen |
| honmaOO-HM-1210 | | 4,500 yen | | 4,500 yen |
| IKURA-DON Fresh from Where Caught | 5 | 1,000 yen | 1,000 yen | 6,300 yen |
| kaneyaOO-KY-3584 | | 500 yen | | 2,500 yen |
| Total | 7 | 31,510 yen | 3,000 yen | 40,435 yen |
| | | 8,102 yen | | 8,102 yen |

After Confirming Order Content.    Go to Next

Fig. 37

### NPO

● Select from the categories of NPOs' activities.

| | | |
|---|---|---|
| Disaster Relief | Sound Child Care | International Cooperation |
| Social Education | Insurance & Medical Care & Welfare | Human Right Advocacy/Peace Promotion |
| Gender-equal Society | Town Formation | Environment |
| Industrial Development | Community Safety | NGO |

1)When you select a NPO category, the organization names belonging to the category are displayed.(Donation recipient organizations are limited, and only the organizations to which you can make a donation will be displayed.)

| Organization Name | Activity Category | Register as Recipient NPO |
|---|---|---|
| ACT NOW SOSB.com CALVARY SQUAD | Disaster Relief | Register as Donation Recipient |
| Network for Training Disaster Rescue Dogs | Disaster Relief | Register as Donation Recipient |

2)When you press the "Register as Donation Recipient" button, the organization is selected as the donation recipient of the "Purchase Offer".

**Fig. 38**

DISPLAY OF PURCHASE OFFER PAGE
Confirm the order content and the delivery destination and if no mistake is found, press "Settle" to start the procedure with settlement agent.

Shopping 🛒     ( View Shopping Cart )   Hε

Purchase Confirmation
<Shopping Cart of MR./MS. ●●>

| | |
|---|---|
| Name : | 00000000 |
| Sound Representation : | 00000000 |
| E-mail Address : | 0000●00.0000.00 |
| Postal Code : | 〒●●-XXX |
| Address : | 0000000000000 |
| Telephone Number : | 0000-000-0000 |
| Total Amount(Tax & Postage included) : | 40,435 yen |
| Total Donation : | 8,102 yen |
| Donation Recipient : | ACT NOW SOSB.com CALVARY SQUAD |

| | |
|---|---|
| Name : | 00000000 |
| Postal Code : | 〒●●-XXX |
| Address : | 0000000000000 |
| Telephone Number : | 0000-000-0000 |
| E-mail Address : | 0000●00.0000.00 |

Content of Shopping Cart

Shop Name      AAA

| Merchandise Name | Qty | Unit Price (Tax excluded) | Postage (Tax excluded) | Total Amount (Tax included) |
|---|---|---|---|---|
| Merchandise ID | | Amount of Donation | | Total Donations |
| CANNON PRINTER | 1 | 15,510 yen | 1,000 yen | 17,335 yen |
| cyanon○○-HM-1210 | | 3,102 yen | | 3,102 yen |
| DIY Kit | 1 | 15,000 yen | 1,000 yen | 16,800 yen |
| honma○○-HM-1210 | | 4,500 yen | | 4,500 yen |
| IKURA-DON Fresh from Where Caught | 5 | 1,000 yen | 1,000 yen | 6,300 yen |
| kaneya○○-KY-3584 | | 500 yen | | 2,500 yen |
| 合 計 | 7 | 31,510 yen | 3,000 yen | 40,435 yen |
| | | 8,102 yen | | 8,102 yen |

*Click help for Cooling-Off.      ※in the order of addition to the shopping cart

( After Confirming Order Content   P..·le:· )

## Fig. 39

SEARCH ENTRY INPUT: Click on the hyperlink text of the category name of the merchandise to search for.

SEARCH RESULT OUTPUT: Categories belonging to the selected category are displayed. Narrow down from the displayed categories.

Fig. 40

SEARCH RESULT OUTPUT: default sort: displayed in the order of recent close dates/percentages of donation/
Japanese syllabary of merchandise names.

| Search from Merchandise Categories | | | | | |
|---|---|---|---|---|---|
| | ▼ Merchandise Registered with This Category | | | | |
| | Merchandise Name | Current Price | Percentage of Donation | Shop Name | Close Date |
| • Personal Computer & Mobile Device | CANNON PRINTER | 37,800 yen | 100% | AAAA | 10/3 |
| • Flower & Garden | CANNON PRINTER no CANNON PRINTER | 35,800 yen | 50% | PASOKON-YA PASOKON-YA PASOKON-YA | 10/5 |
| • Drinks & Alcohol | | | | | |
| • Beauty & Health & Welfare | CANNON PRINTER | 45,800 yen | 20% | PASOKON-YA | 10/8 |
| • Fashion | CD - RW YAMAHA | 60,000 yen | 10% | AAA | 10/12 |
| • Cars & Sports & Outdoor | | | | | |
| • Travel & Tickets | | | | | |
| • Books & Music & Movies | | | | | |
| • Food | | | | | |
| • Life & Interior Design | | | | | |
| • Hobbies & Culture | | | | | |
| • Services | | | | | |

## Fig. 41

### MERCHANDISE INFORMATION OUTPUT:

Help

**Shop Name** Shop Name up to 25 characters ●●●●●●●●●●●●●●●●●●●

**Merchandise Name** Merchandise Name up to 25 characters ●●●●●●●●●●●●●●●●●●

**Merchandise ID** 123456-123456456789123

Amount of Donation : 2% of Contract Price

**Point**

This sentence is dummy to check atmosphere of sentences with kanji and hiragana. This sentence is dummy

■"BJ F850" is equipped with a newly-developed superdense print head at a pitch of 1200 dpi, and has achieved high-definition full-color printing at 1200 × 1200 dpi.

### Specification / Explanatory Description

This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana. This sentence is dummy to check sentences with kanji and hiragana.

To place a bid, please input bid price and memeber ID and password into the form below. If you are not registered yet, please complete the Membership Registration.

ID

Password

Current Bid Price 2,100 yen   Minimum Bid Unit 100 yen

Bid                    yen      Place Bid

Shop HOME     Inquiry As To Merchandise

| | |
|---|---|
| Auction Open Date | 2000/10/2 |
| Auction Close Date | 2000/10/12 |
| Lowest Bid Price | 1,500 yen |
| Highest Bidder's Nickname | Hanako |
| Current Bid Count | 5 |

Click here for the payment method and the delivery method.

Back     Auction top

Whether the bid is successful or not is decided.

Fig. 42

MERCHANDISE INFORMATION OUTPUT: When the bid price placed is lower than the ones of other bidders, a message to encourage to place a bid again is displayed.

You are outbid by another bidder.

Please place a bid again.

OK

The dialog is closed to return to the bid page.

This dialog is displayed in a separate window.

MERCHANDISE INFORMATION OUTPUT: When the bid price placed is highest, the message as below is diaplayed.

Thank you for your bidding.
You are the highest bidder.

OK

The dialog is closed to return to the bid page.

This dialog is displayed in a separate window.

# Fig. 43

DISPLAYED CONTENT: A purchase history is displayed.(in the descending order of purchased time & date)

| Your Current Points | 00000 points |
|---|---|

Click on "Order No." to display details.

| Order No. | Date of Order | Shop Name of Purchase | Total Amount (Tax & Postage included) | Amount of Donation | Recipient NPO | Order Status |
|---|---|---|---|---|---|---|
| abc-123 | 2000/05/18 | AAA | 52,005 yen | 9,306yen | ACT NOW SOSB.com | Accepted |
| sac-fd3 | 2000/05/15 | MARU | 18,612 yen | 3,102yen | ACT NOW SOSB.com | Cancelled |
| adc-1df | 2000/05/14 | Liquor Shop KAWASAKI | 18,612 yen | 3,102yen | ACT NOW SOSB.com | Returned |
| gfc-123 | 2000/05/11 | WINE NO MISE | 18,612 yen | 3,102yen | ACT NOW SOSB.com | Accepted |
| abc-1fgh | 2000/05/04 | AKUSE | 18,612 yen | 3,102yen | ACT NOW SOSB.com | Accepted |
| abc-1fd | 2000/05/02 | AHUSA | 18,612 yen | 3,102yen | ACT NOW SOSB.com | Accepted |

DISPLAYED CONTENT: When you click on "Order No.", the order information is displayed.

| Merchandise Name | Qty | Unit Price (Tax excluded) | Postage (Tax excluded) | Total Amount (Tax & Postage included) |
|---|---|---|---|---|
| Merchandise ID | | Amount of Donation | | Total Donations |
| CANNON PRINTER | 1 | 15,510 yen | 1,000 yen | 17,335 yen |
| AAS-BJ-F850 | | 3,102 yen | | 3,102 yen |
| CANNON PRINTER | 1 | 15,510 yen | 1,000 yen | 17,335 yen |
| AAS-BJ-F850 | | 3,102 yen | | 3,102 yen |
| CANNON PRINTER | 1 | 15,510 yen | 1,000 yen | 17,335 yen |
| AAS-BJ-F850 | | 3,102 yen | | 3,102 yen |

Back

| INTERNATIONAL SEARCH REPORT | International application No. |
|---|---|
| | PCT/JP01/06151 |

**A. CLASSIFICATION OF SUBJECT MATTER**
  Int.Cl⁷ G06F17/60

According to International Patent Classification (IPC) or to both national classification and IPC

**B. FIELDS SEARCHED**

Minimum documentation searched (classification system followed by classification symbols)
  Int.Cl⁷ G06F17/60

Documentation searched other than minimum documentation to the extent that such documents are included in the fields searched
  Jitsuyo Shinan Koho      1922-1996    Toroku Jitsuyo Shinan Koho  1994-2001
  Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 96/34358 A1 (Every Penny Counts Inc.), 31 October, 1996 (31.10.96), Full text; all drawings & JP 11-505343 A    & EP 850456 A & CA 2252638 A    & AU 5670696 A | 1-20 |
| A | JP 9-128656 A (Fujitsu Limited), 16 May, 1997 (16.05.97), Full text; all drawings | 1-20 |
| A | JP 10-78989 A (Fujitsu Limited), 24 March, 1998 (24.03.98), Full text; all drawings | 1-20 |
| A | JP 10-31792 A (Tec Corporation), 03 February, 1998 (03.02.98), Full text; all drawings | 1-20 |
| A | JP 11-232361 A (Oki Electric Industry Co., Ltd.), 27 August, 1999 (27.08.99), Full text; all drawings | 1-20 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 October, 2001 (05.10.01) | 16 October, 2001 (16.10.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP01/06151 |

C (Continuation).   DOCUMENTS CONSIDERED TO BE RELEVANT

| Category* | Citation of document, with indication, where appropriate, of the relevant passages | Relevant to claim No. |
|---|---|---|
| A | Miki KUBOTA, "Beikoku ni Manabu Web Marketing, Dai 11kai; Kodomo Senyou Shopping Mall no 'iCanBuy.com'; Miseinensha demo Kaimono dekiru Net de Oya kara 'Okozukai'", Nikkei Net Business, No. 53, Nikkei BP K.K., 15 November, 1999 (15.11.99), pages 174 to 178 | 1-20 |

Form PCT/ISA/210 (continuation of second sheet) (July 1992)